# EUROPEAN PATENT SPECIFICATION

(11) **EP 4 273 526 B1**
(45) Date of publication and mention of the grant of the patent: **14.08.2024**
(21) Application number: 22171703.6
(22) Date of filing: 05.05.2022
(51) Int. Cl.: G01L 1/14, G01L 1/26, G06F 3/041, G06F 3/044

(54) **A METHOD FOR OPERATING A LAYERED DEVICE AND AN ARRANGEMENT COMPRISING A LAYERED DEVICE**
VERFAHREN ZUM BETRIEB EINES GESCHICHTETEN SYSTEMS UND ANORDNUNG MIT EINER SOLCHEN GESCHICHTETEN VORRICHTUNG
PROCÉDÉ DE FONCTIONNEMENT D'UN DISPOSITIF EN COUCHES ET AGENCEMENT COMPRENANT UN DISPOSITIF EN COUCHES

(43) Date of publication of application: 08.11.2023
(73) Proprietor: Forciot Oy, 33720 Tampere (FI)
(72) Inventor: ISO-KETOLA, Pekka, 38200 Sastamala (FI); LIIMATTA, Toni, 33540 Tampere (FI)
(74) Representative: Berggren Oy

(56) References cited:
- EP-A1- 3 200 053
- EP-A1- 3 835 746
- WO-A1-2019/138153
- WO-A1-2020/064648
- WO-A1-2021/170883
- US-A1- 2009 273 483
- US-A1- 2021 239 546

## Description

### Technical field

The invention relates to a device that comprises a functionality of detecting compression capacitively. The compression is caused by a load, i.e. force or a pressure, whereby the invention relates to a capacitive force and/or pressure sensors.

### Background

A capacitive compression sensor 100 comprises a primary electrode layer 300 comprising at least a first primary electrode 301, a secondary electrode layer 400 comprising at least a first secondary electrode 401, and a compressible layer 200 comprising dielectric material between the primary electrode layer 300 and the a secondary electrode layer 400. An operating principle of such a sensor is well known e.g. from the document WO 2018/011464.

In short, the capacitance of the first primary electrode 301 relative to the first secondary electrode 401 depends on a distance between the electrodes, the distance being indicative of compression of the compressible layer 200 between the electrodes. The compression is indicative of a pressure and/or a force at that point by Hooke's law.

Nowadays, different functionalities of a system are enabled by using different components for different functionalities. E.g. a device having a force/pressure sensing functionality and a lightning functionality has one layered part for sensing the force/pressure and another part, e.g. further layer for illuminating. This makes the devices reasonably complex.

Furthermore, the capacitive measurement principle is reasonably sensitive to electrical fields of the environment. Therefore, in order to obtain reliable results, particularly when also other functionalities are present, efficient electromagnetic shielding is used to shield the capacitive part from other parts. As an example, reference is made to the shielding layers 600a and 600b of Fig. 5b of WO 2018/011464. The shielding makes the devices even more complex.

In this field, the document EP 3 835 746 A1 discloses hybrid large-area pressure sensor with a capacitive sensor and a resistive sensor integrated thereinto. The document EP 3 200 053 A1 discloses a display device including a display panel and a first sensor configured to sense a position of a touch of a user and a second sensor configured to sense a pressure of the touch. The document US 2009/0273483 A1 discloses a flexible electroluminescent capacitive sensor system containing an electroluminescent capacitive sensor, a capacitance meter, and an electroluminescence electronic drive. The document WO 2020/064648 A1 discloses a sensor arrangement comprising first electrodes on a first surface, second electrodes on a second surface and third electrodes on the second surface, said first surface and said second surface being superposed, wherein disposed directly above each first electrode is a second electrode, and the third electrodes are disposed between the second electrodes. A force sensor is formed between a first electrode and a second electrode. A touch sensor is formed between a first electrode and a respective third electrode. The document WO 2021/170883 A1 discloses a touch surface and a method for detecting and measuring the force applied by a touch against such a touch surface.

Complex systems cost more to manufacture and tend to be less reliable than simpler systems. There is therefore a need for simple multifunctional devices capable of detecting load.

### Summary

It has been found that the complexity can be reduced by integrating the other functionality or the other functionalities to such a layer of the device that comprises an electrode that is used for measuring the compression or in between them. Thus, the device is capable of detecting compression capacitively and it also has another functionality, other than detecting compression capacitively. The other functionality may be a measurement of another parameter, operating an actuator, operating a light source, or operating a heat source. The component for the other functionality, which may, but need not, be used also for measuring the compression, is arranged in or on such a layer that comprises an electrode that is used for measuring the compression or within the compressible material (or material layer) in between the electrodes.

When measuring the capacitance to determine compression, a first secondary electrode 401 is connected to a common potential (e.g. ground potential). Then, the capacitance of a first primary electrode 301 is measured relative to (at least) the first secondary electrode 401. In prior art, the layer comprising the first secondary 401 electrode has been used only for the purpose of measuring compression, i.e. forming a reference electrode for the first primary electrode 301.

However, it has now been found that the compression (determinable from the capacitance) needs not be measured all the time. Moreover, at such a time interval that the compression is not measured, the secondary electrode layer that comprises the first secondary electrode 401 can be used for other purposes, i.e. to enable the other functionality of the device.

Moreover, shielding from external objects can be, at least to some extent, done by the electrode(s) 401, 402 of the secondary electrode layer, when the device 110 is arranged so that the object that causes the load to the device is arranged on the side of the secondary electrode layer. Furthermore, shielding from the effects of the second functionality is not required, because the second functionality is taken into account in the determining of the compression of the compressible layer 200. The second functionality may be taken into account by signal analysis or by controlling the times when the second functionality is active.

Thus, the invention relates, on one hand, to a method for operating a device 110 having at least a first functionality and a second functionality, the first functionality being capacitive sensing of compression and the second functionality being another, different, functionality. The method may be performed by a control unit 510. The control unit may be, but need not be, part of the device 110. The control unit 510 may be comprised by an arrangement 100 that comprises the device.

The invention is described in more specific terms in claims 1 and 10.

### Brief description of the drawings

- Fig. 1a: shows a layered device having at least two functionalities, one of which is measurement of compression, and an arrangement further comprising control unit,
- Fig. 1b: shows a layered device having at least two functionalities, one of which is measurement of two compressions, and an arrangement further comprising a connector,
- Fig. 1c: shows an arrangement comprising a layered device having at least two functionalities, one of which is measurement of two other capacitances, and an arrangement further comprising a control unit,
- Fig. 1d: shows an arrangement comprising a layered device having at least two functionalities, one of which is measurement of compression of two layers,
- Fig. 1e: shows an arrangement comprising a layered device, the layers being coated,
- Fig. 2a: shows an arrangement comprising a layered device having at least two functionalities, one of which is measurement of compression, and the other can be enabled by using an activatable component,
- Fig. 2b: shows the arrangement of Fig. 2a, the device being coated,
- Fig. 2c: shows an arrangement comprising a layered device having two electrodes in the secondary electrode layer and an activatable component,
- Fig. 2d: shows, in a side view, an embodiment, wherein an activatable component also serve as an electrode,
- Fig. 2e: shows, in a top view, an embodiment, wherein an activatable component also serves as the first secondary electrode,
- Fig. 3a: shows a layered device having a first secondary electrode for the purpose of another functionality than sensing compression, the device sensing a compression using a first primary electrode,
- Fig. 3b: shows the layered device of Fig. 3a when the device is sensing another parameter than compression and the first secondary electrode is used for the other functionality,
- Fig. 3c: shows the layered device of Fig. 3a when the device is sensing another parameter than compression, even if the device is being compressed, and the first secondary electrode is used for the other functionality,
- Fig. 4a: shows, in a side view, a layered device having an activatable component for the purpose of another functionality than sensing compression, the device sensing a compression using a first primary electrode,
- Fig. 4b: shows the layered device of Fig. 4a when the activatable component is activated for the purpose of using it,
- Fig. 4c: shows the layered device of Fig. 4a when the activatable component is activated for the purpose of using it while the device is being compressed,
- Fig. 4d: shows, in a top view, a possible wiring of the secondary electrode layer of the device of Fig. 4a,
- Fig. 4e: shows, in a top view, a possible wiring of the secondary electrode layer of the device of Fig. 4a,
- Fig. 5a: shows a signal obtainable from the primary electrode during a first period t1, when the other functionality is disabled, and during a second period t2, when the other functionality is enabled,
- Fig. 5b: shows a signal obtainable from the primary electrode during a first period t1, when the other functionality is disabled, and not measuring a signal from the primary electrode during a second period t2, when the other functionality is enabled,
- Fig. 5c: shows a signal obtainable from the primary electrode during a first period t1, when the other functionality is disabled; not measuring a signal from the primary electrode during a beginning of the second period t2, when the other functionality is enabled; and measuring a signal from the primary electrode during an end of the second period t2, when the other functionality is enabled,
- Fig. 5d: shows a signal obtainable from the primary electrode during a first period t1, when the other functionality is disabled; not measuring a signal from the primary electrode during a second period t2; and measuring a signal from the primary electrode during a secondary first period, when the other functionality is enabled,
- Fig. 6: shows connecting the device 110 to a first control unit 510 and to a second control unit 530,
- Figs. 7a to 7c: show a device having an activatable component and two electrodes in a primary electrode layer for measuring compression from to different locations,
- Fig. 8: shows a device having two electrodes in a secondary electrode layer and using them for purpose of shielding when measuring compression, and
- Fig. 9: shows a device having at least two functionalities, one of which is measurement of compression, and an arrangement further comprising control unit.

In the figures, Sz denotes a direction of a thickness of a device 110. A direction Sx is perpendicular to Sz. A direction Sy is perpendicular to both Sz and Sx.

### Detailed description

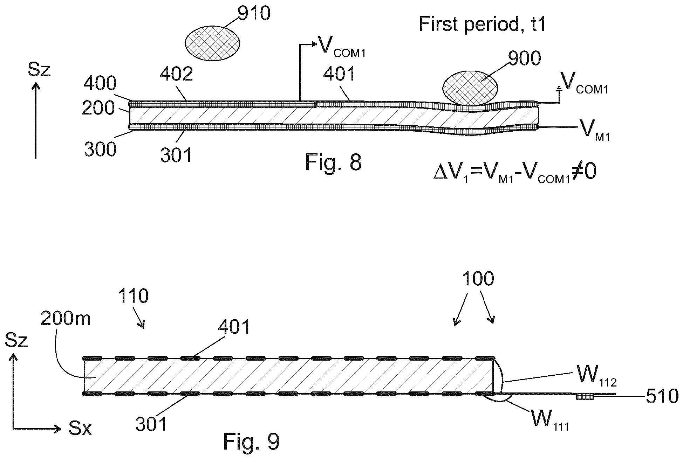

Most of the embodiments of the invention are hereinbelow explained using a layered device 110 as an example. However, a layered structure is not essential as disclosed later in connection with Fig. 9, which shows a device 110 and an arrangement 100.

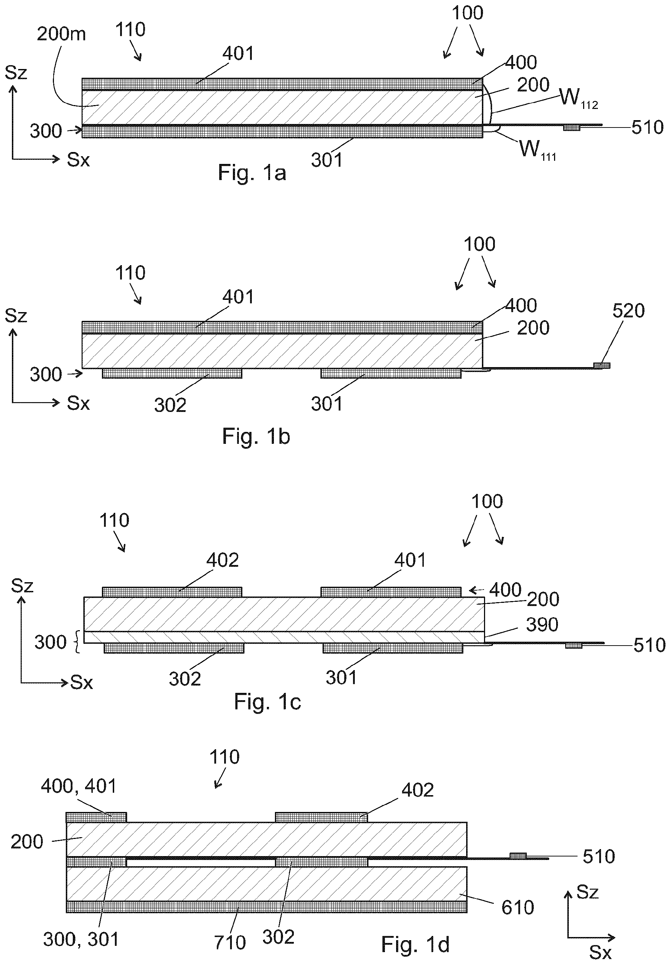

Figure 1a shows an arrangement 100 for operating a layered device 110. The layered device 110 has at least two different functionalities, i.e. at least a first functionality and a second functionality. The first functionality is capacitive sensing of compression and the second functionality is another, different, functionality. The compression is a result of a load, i.e. a pressure, which is distributed force, or a force, which is concentrated. Thus, the first functionality is also a capacitive measurement of at least load, i.e. force and/or compression.

To enable the first functionality, the device 110 comprises a primary electrode layer 300 comprising at least a first primary electrode 301. Referring to Fig. 1a, the primary electrode layer 300 may comprise only one electrode 301. However, referring to Figs. 1b to 1d, 2c, and 7a to 7c, in an embodiment, the primary electrode layer 300 comprises the first primary electrode 301 and a second primary electrode 302. This has the effect that compression can be measured from the different locations defined by the different electrodes 301, 302 of the primary electrode layer 300. Naturally, the primary electrode layer 300 may comprise further electrodes as known from prior art.

To enable the first functionality, the device 110 further comprises a secondary electrode layer 400 comprising at least a first secondary electrode 401. Referring to Fig. 1a, the secondary electrode layer 400 may comprise only one electrode 401. However, referring to Figs. 1c, 1d, 2c, and 8, in an embodiment, the secondary electrode layer 400 comprises the first secondary electrode 401 and a second secondary electrode 402. This has the effect that the electrodes 401, 402 of the secondary electrode layer 400 define more locations on an area. Thus, if the secondary electrodes 401, 402 are used for the other functionality (e.g. sensing touch or pulse) this other quantity can be determined with better spatial accuracy, i.e. at the locations defined by the electrode 401, 402. Moreover, when using the first functionality, the electrodes 401, 402 can be used for shielding, as will be detailed below.

To enable the first functionality, the device 110 further comprises a compressible layer 200. The compressible layer 200 is arranged between the primary electrode layer 300 and the a secondary electrode layer 400. More specifically, at least a part of the compressible layer 200 is arranged between the first primary electrode 301 and the first secondary electrode 401. The compressible layer 200 comprises compressible and electrically insulating material 200m. More specifically, at least some compressible and electrically insulating material 200m is arranged between the first primary electrode 301 and the first secondary electrode 401. An electrode (301, 401) may be arranged in the layer 200 whereby the material 200m may be arranged on both sides of the electrode (301, 401).

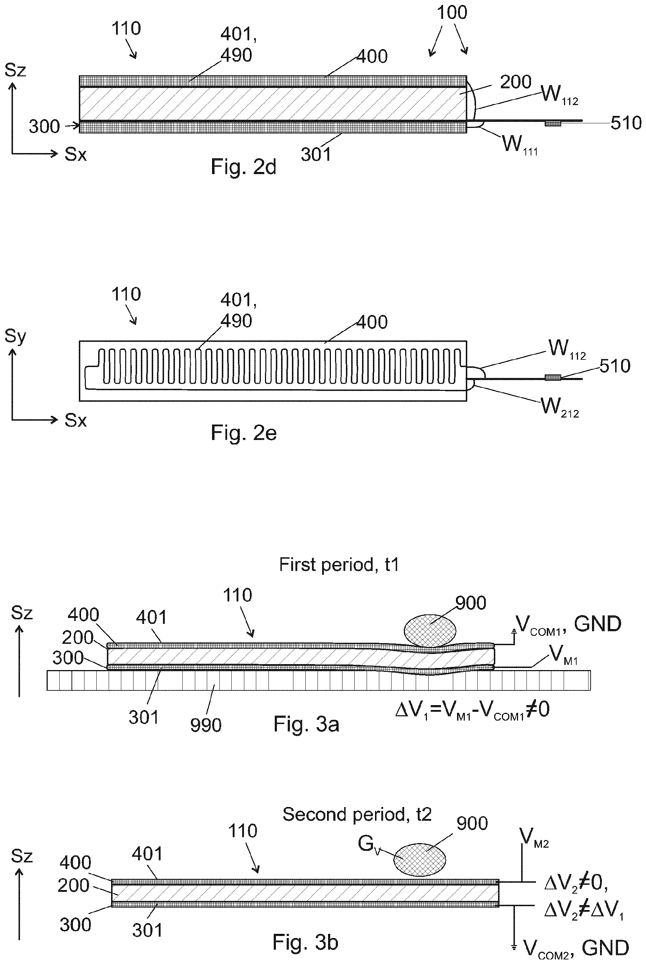

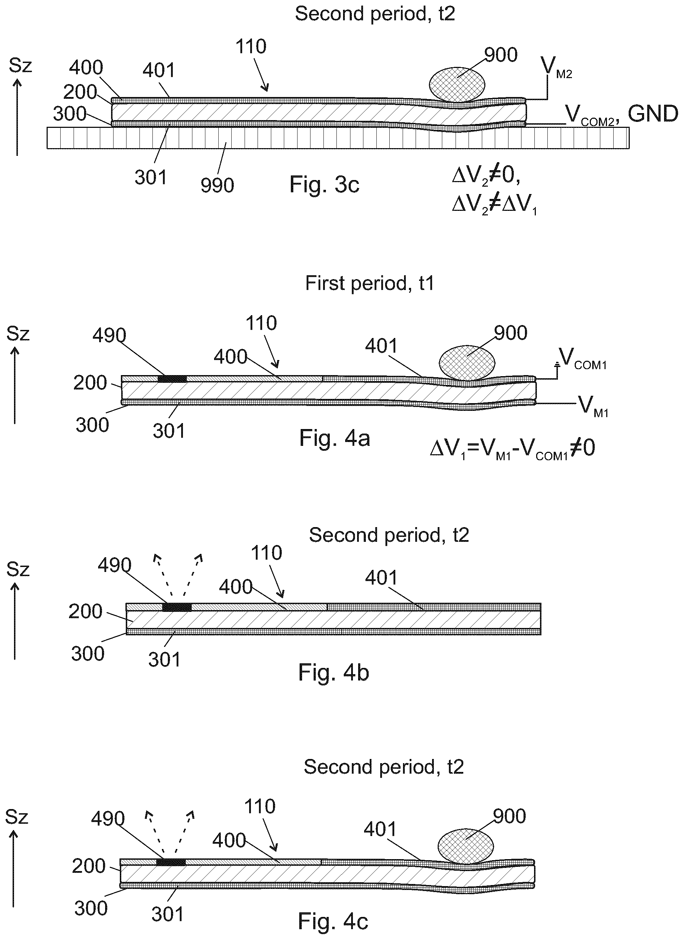

The first functionality of the device 110 is based on the capacitive measurement principle of compression. As well known, a capacitance of a capacitor formed by two electrodes is related to their area, a dielectric constant of material in between them, and a mutual distance of the electrodes. The capacitance may depend also on other factors, e.g. a dielectric constant of material in the vicinity of the electrodes, elsewhere than between them. Figures 3a and 4a show an object 900 (e.g. a finger of a user) pressing the first secondary electrode 401 against the first primary electrode 301. Thus, the material of the compressible layer 200 becomes compressed, whereby the distance between the electrodes 301, 402 decreases, and the capacitance C₃₀₁ of the first primary electrode 301 relative to the first secondary electrode 401 changes (i.e. increases). Even without any compression, the presence of the object 900 near one of the electrodes 401, 301 may slightly affect the capacitance between them.

Referring to Figs. 3a and 4b, the capacitance C₃₀₁ of the first primary electrode 301 relative to the first secondary electrode 401 is measured during a first period of time t1. To measure the capacitance C₃₀₁, an embodiment of a method for operating the layered device 110 comprises arranging a first potential difference ΔV₁ between the first primary electrode 301 and the first secondary electrode 401. The first potential difference ΔV₁ is non-zero. The first potential difference ΔV₁ is arranged by connecting the first secondary electrode 401 to a first common potential V_{COM1}, and conducting a first measurement potential V_{M1} to the first primary electrode 301. The first measurement potential V_{M1} is different from the first common potential V_{COM1}. The first potential difference ΔV₁ is, by definition, a difference (V_{M1} - V_{COM1}) between the potential of the first primary electrode 301 and the potential of the first secondary electrode 401. The embodiment further comprises measuring the capacitance C₃₀₁ of the first primary electrode 301 relative to (at least) the first secondary electrode 401 for the purpose of determining a compression of the compressible layer 200. As detailed above, the capacitance may depend on other factors, too. During the first period of time t1, the second functionality of the device 110 is disabled for not disturbing the capacitive measurements of compression. Preferable, the first common potential V_{COM1} is a ground potential GND. The first measurement potential V_{M1} may result from direct current (DC), whereby the sign of the first potential difference ΔV₁ can be constant throughout the first period of time t1, or the first measurement potential may be a result of alternating current (AC). Preferably, the sign of the first potential difference ΔV₁ is constant throughout the first period of time t1. It is noted, that if the capacitance C₃₀₁ is measured by charging or discharging the capacitor, the potential of the capacitor changes during charging/discharging.

The first common potential V_{COM1} may have the effect of shielding the compressible layer 200 and thus also shielding the effect of a foreign object 910 on the primary capacitance C₃₀₁ affected primarily by the load caused by an object 900 (see Fig. 8). To have the shielding effect, in an embodiment, the device 110 is used such that the object 900 that causes the load causing the compression of the compressible layer 200 is, during the first period of time t1, closer to the secondary electrode layer 400 than to the primary electrode layer 300 (see Figs. 3a, 4a, and 8). The object 900 may press the first secondary electrode 401 or some material 820 arranged on top of the electrode 401. In an embodiment of the method, the device 110 is arranged on a support 990 so that the primary electrode layer 300 is closer to the support 990 than the secondary electrode layer 400 (see Fig. 3a). Naturally, the compression of the compressible layer 200 is a result of both the support 990 and the object 900. However, to have the shielding effect, in an embodiment, the device 110 is used such that the object 900 that causes the load causing the compression of the compressible layer 200 is configured to approach the device 110 from the side of the secondary electrode layer 400. Thus, in an embodiment of the method, during the first period of time t1, at least a part of the device is arranged between a support 990 and an object 900 causing the compression of the compressible layer 200 such that the primary electrode layer 300 faces the support 990 and the secondary electrode layer 400 faces the object 900 (see Fig 3a). Moreover, during the second period of time, the primary electrode layer 300 faces the support 990. Moreover, electrodes 401, 402 of the secondary electrode layer 400 may be used for shielding during the first period of time t1, as detailed below.

Correspondingly, an arrangement 100 comprises a device 110 configured to be used such that the object 900 causing the compression of the compressible layer 200 is configured to approach the device 110 from the side of the secondary electrode layer 400.

These electric potentials can be generated by a control unit 510 (see e.g. Fig. 1a). In the alternative, the electric potentials can be guided to the electrodes through a connector 520 (see Fig. 1b). Thus, a method for operating the layered device 110 needs not be carried out by the arrangement 100 of Fig. 1a.

In an embodiment, the arrangement 100 comprises the control unit 510. The control unit 510 is, during the first period of time t1, configured to arrange the first potential difference ΔV₁ between the first primary electrode 301 and the first secondary electrode 401 by connecting the first secondary electrode 401 to a first common potential V_{COM1} and conducting a first measurement potential V_{M1} to the first primary electrode 301, the first measurement potential V_{M1} being different from the first common potential V_{COM1}. The control unit 510 is, during the first period of time t1, configured to measure a capacitance C₃₀₁ of the first primary electrode 301 relative to (at least) the first secondary electrode 401 for determining a compression of the compressible layer 200.

Moreover, the device 110 comprises at least a primary first primary wire W₁₁₁ that is configured to guide the first measurement potential V_{M1} to the first primary electrode 301. Moreover, the device 110 comprises at least a primary first secondary wire W₁₁₂ that is configured to guide the first common potential V_{COM1} to the first secondary electrode 401. Reference is made to Fig. 1a.

As for the numbering of the wires, a wire Wᵢⱼₖ is arranged in the layer k (1 for primary electrode layer 300 and 2 for secondary electrode layer 400), connected to the component/electrode having the index j of that layer, the wire being the i:th wire connected to that component/electrode.

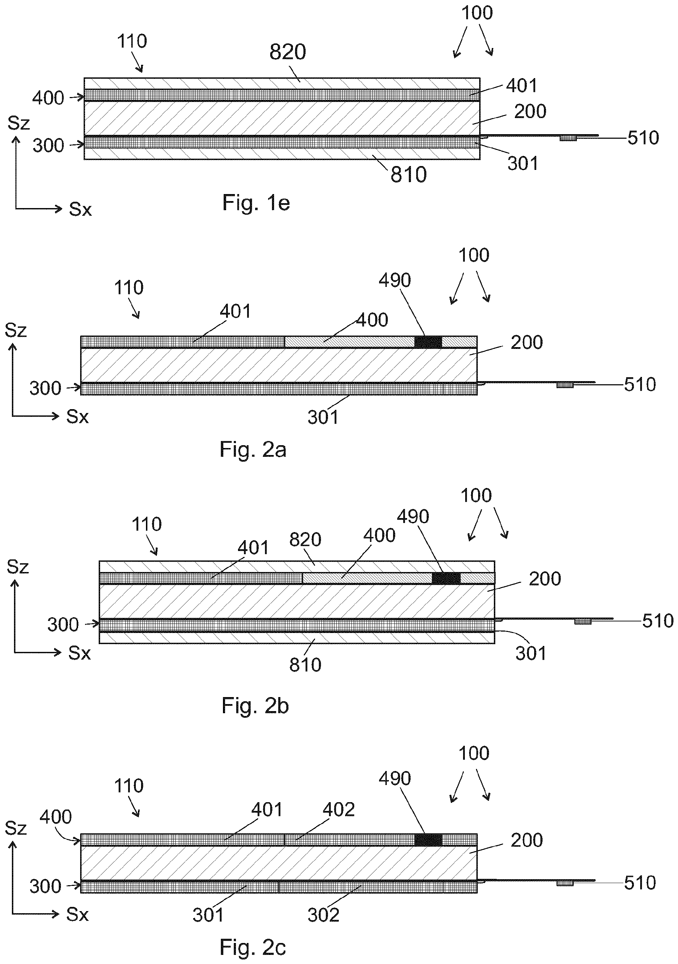

While in general, only one wire needs to be guided to an electrode 301, 401, it is noted already at this point, that the first primary electrode 301 or the first secondary electrode 401 may be used as an activatable component 490, such as a heater. Figures 2d and 2e show such an embodiment in a side view and top view, respectively, wherein the component is arranged in the secondary electrode layer 400. To activate the heating functionality, two wires are needed: one to guide a current to the component 490 and another to guide a current from the component 490. Clearly, the primary first secondary wire W₁₁₂ may be used to guide current to the first secondary electrode 401. Thus, in an embodiment, where the first secondary electrode 401 is used as an activatable component 490, the device 110 comprises at least a secondary first secondary wire W₂₁₂ that is configured to guide a current from the first secondary electrode 401, see Fig. 2e.

Even without two wires, an electrode (301, 401) may be used, in addition to sensing compression, as an antenna.

In general, an electrode, in particular the electrode 301 or 401, comprises electrically conducting material. An electrically conducting material has a resistivity of at most 1 Ωm at a temperature of 23 °C, preferably at most 0.1 Ωm at a temperature of 23 °C. Also the wires W₁₁₁, W₁₁₂, W₂₁₂, W₁₂₂, W₂₂₂ comprise electrically conducting material in this sense.

As indicated above, the compressible layer 200 comprises material that is compressible and electrically insulating. As for the electrical insulation, a resistivity of the material of the compressible layer 200 is, in an embodiment, at least 10 Ωm at a temperature of 23 °C. This allows for not forming a short-circuit between the electrodes 301, 401. As for the compressibility, a Young's modulus of the material of the compressible layer is, in an embodiment, at most 3 GPa, preferably at most 1 GPa, such as from 0.05 MPa to 15 MPa, such as from 0.2 MPa to 5 MPa. These values are given at the temperature 23 °C. This allows for sufficient compression also when the compression is generated by a human without tools (e.g. by pressing the device 110 with fingers, by standing on the device 110, or by laying or sitting on the device 110). Moreover, a compressible material can be compressed by at least 10 % in a reversible manner. The reversibility of the compression is spontaneous, i.e. elastic.

Preferably, the device 110, including the electrode layers 300, 400 and the compressible layer 200, is stretchable. A stretchable material can be stretched by at least 10 % in a reversible manner at a temperature of 20 °C. The stretchable material can be stretched in such a way in a direction that is perpendicular to a direction of a thickness of the material. The reversibility of the stretching is spontaneous, i.e. elastic. This applies to the device 110, too. However, not all the parts of the device 110 need to be stretchable. E.g. the component 490 may be rigid. Even if the device 110 is stretchable such that it can be stretched by at least 10 % in a reversible manner at a temperature of 20 °C, it may comprises a rigid (non-stretchable) component.

More preferably, the device 110, including the electrode layers 300, 400 and the compressible layer 200, is conformable. Herein the term conformable refers to material that is flexible, compressible, and stretchable. A planar flexible material can be bent to a radius of curvature of 10 mm without breaking the material at a temperature of 20 °C. Moreover, the flexible material can be thereafter turned back to the planar form at a temperature of 20 °C without breaking the material. Thus, a planar conformable device 110 is flexible as indicated above, compressible in the direction Sz of its thickness as detailed above, and stretchable in a direction of the plane of the planar device 110 (i.e. in the direction(s) Sx and/or Sy). A planar conformable device 110 can be arranged to conform a surface of a sphere or a hemisphere having a radius of 10 cm at a temperature of 20 °C without introducing plastic (i.e. irreversible) deformations to the material. Naturally, the device 110 may be larger. Thus, at least a part of a conformable device may be arranged to conform a surface of a hemisphere having a radius of 10 cm at a temperature of 20 °C without introducing plastic (i.e. irreversible) deformations to the material

The stretchability, preferably conformability, of the device 110 allows for its use in various applications. A stretchable or conformable device 110 can be arranged on many surfaces for detecting the compression (i.e. load in the meaning of force and/or pressure) and furthermore, the device has also the second functionality. Moreover, the device 110 may have a very simple structure. Examples of devices wherein the device 110 can be used include remote controllers, steering wheels, handles, handle bars, joysticks, dashboards (e.g. of vehicles), seats and tables.

The second functionality of the device 110 is enabled during a second period of time t2. The second functionality is enabled by using the first secondary electrode 401 In an embodiment, the second functionality is actively enabled by the same entity that performs the method. In an embodiment, the fact of the second functionality being enabled is detected by signal analysis. Thus, an embodiment comprises detecting that the second functionality is enabled.

The second functionality is enabled by using the first secondary electrode 401 ; and the device 110 is used such that the object 900 that causes the load causing the compression of the compressible layer 200 is configured to approach the device 110 from the side of the secondary electrode layer 400 (see above). This has two effects. First, some types of second functionalities, e.g. capacitive measurements, cannot be used, if the primary electrode layer 300 would be arranged between the first secondary electrode 401 and the object 900 causing the change to the capacitance of the first secondary electrode 401, because the primary electrode layer would shield the secondary electrode layer from disturbance in the electric field. Therefore, capacitive measurements are preferably used for the second functionality only when the secondary electrode layer 400 is arranged between the primary electrode layer 300 and the object 900 causing the change to the capacitance of the first secondary electrode 401 (see Fig. 3b and above). Second, it is noted that the secondary electrode layer 400 does not prevent using an activatable component 490 in the primary electrode layer 300 (see Fig. 4b). For example, a heater (e.g. the first primary electrode 301) arranged in the primary electrode layer 300 could be used also in the embodiment of Fig. 4b, and the heat generated in the primary electrode layer 300 would be, eventually, conducted all over the device 110. However, typically the activatable component 490 is needed to form a signal or a response to a user interface, and the user interface is closer to the secondary electrode layer 400 than to the primary electrode layer 300. For example, the secondary electrode layer 400, or a material layer 820 (see Fig. 1e) arranged on top of the secondary electrode layer 400, may form the user interface. Herein the term "on top" means that the secondary electrode layer 400 is arranged between the material layer 820 and the compressible layer 200 (see Fig. 1e).Therefore, to obtain a more prompt response on the user interface, preferably, the component 490 is arranged in or on the secondary electrode layer 400.

In an embodiment, the second functionality comprises another function than measuring the same signal from which the compression is detected and in the same way as the compression is detected. More specifically, the second functionality comprises another functionality than capacitive measurement of a quantity such that the first secondary electrode 401 is connected to the first common potential V_{COM1}, and the first measurement potential V_{M1} is conducted to the first primary electrode 301. Thus, in an embodiment, the second functionality is not a measurement using the same signal from which the capacitance C₃₀₁ is determined during the first period of time.

As for a type of the second functionality of the device 110, there are at least three options.

As a first option, the first secondary electrode 401 may be used to measure a capacitance of the first secondary electrode 401 relative to its surroundings including the first primary electrode 301. This is shown in Fig. 3b. For example, the first secondary electrode 401 may be arranged on top of the device 110 so that an object 900 (e.g. a hand or a finger of a user) can be arranged close to the first secondary electrode 401. When measuring the capacitance C₄₀₁ of the first secondary electrode 401, a second potential difference ΔV₂ is applied between the first secondary electrode 401 and the first primary electrode 301. To enable measurement of the capacitance C₄₀₁, the second potential difference ΔV₂ is different from zero (i.e. not zero). Moreover, to ensure that the signal caused by the object 900 is readable from the capacitance C401, the second potential difference ΔV₂ is different from the first potential difference ΔV₁. Therefore, in this embodiment, the second functionality comprises another functionality than capacitive measurement of a quantity such that the first secondary electrode 401 is connected to the first common potential V_{COM1}, and the first measurement potential V_{M1} is conducted to the first primary electrode 301.

More preferably, the second potential difference ΔV₂ is arranged, during the second period of time t2, so that the first primary electrode 301 is electrically connected to a second common potential V_{COM2}, which even more preferably is a ground potential GND. This has the beneficial effect that commonly also the object 900 is in an at least loose connection to a ground potential, whereby connecting the ground potential also to the first primary electrode 301 ensures that the effect cause by the object 900 is seen in the capacitance C₄₀₁.

Concerning a second option, the first secondary electrode 401 can be called an activatable component 490. As the second option, the activatable component 490 may be arranged in or on the secondary electrode layer 400 (or in the compressible layer 200). The term activatable component refers to a transducer. The term activatable component may refer to an electric component that comprises only one lead to which a signal is applied or generated, such as an antenna. The antenna transduces an electric signal to an RF signal or vice versa. In such a case the activation involves feeding an electric current to the component 490 or receiving an electric current from the component 490.

The term activatable component may refer to an electric component that comprises two leads between which a signal is applied or generated. For example, one lead may be for letting in current and another for letting out current. The component 490 may be activated by driving a current through these leads or forming a potential difference between the leads. In the alternative, the activatable component 490 may be activated by another form of energy that causes a potential difference to the leads which can be sensed as such or as an electric current. Fig. 4b shows an embodiment, wherein, during the second period of time t2, the component 490 is activated. In Fig. 4b, the arrows indicate illumination, which is caused by an electric current passing the component 490. Examples of the component 490 will follow. Also in this embodiment, the second functionality comprises another functionality than capacitive measurement of a quantity such that the first secondary electrode 401 is connected to the first common potential V_{COM1}, and the first measurement potential V_{M1} is conducted to the first primary electrode 301. However, as discussed below, when the second functionality is active, the method may also comprise capacitive measurement of a quantity such that the first secondary electrode 401 is connected to the first common potential V_{COM1}, and the first measurement potential V_{M1} is conducted to the first primary electrode 301; but the second functionality comprises also at least something else. For example, the second functionality comprises something else than signal analysis of a signal measured from the electrodes (301, 401) such that the first secondary electrode 401 is connected to the first common potential V_{COM1}, and the first measurement potential V_{M1} is conducted to the first primary electrode 301.

As a third option, as indicated already above, a first secondary electrode 401 may serve as an activatable component 490 so that during the first period of time t1, the first secondary electrode 401 is electrically coupled only to the first common potential V_{COM1} (e.g. using one or both of the wires W₂₁₂, W₁₁₂) and during a second period of time t2, an electric current is driven through the first secondary electrode 401 using the wires W₁₁₂, W₂₁₂ for activating the component 490. Reference is made to Fig. 2e. For example, a heater may serve for the purposes of an electrode 401 and an activatable component 490, which when applying an electric current, transduces the electric current to heat.

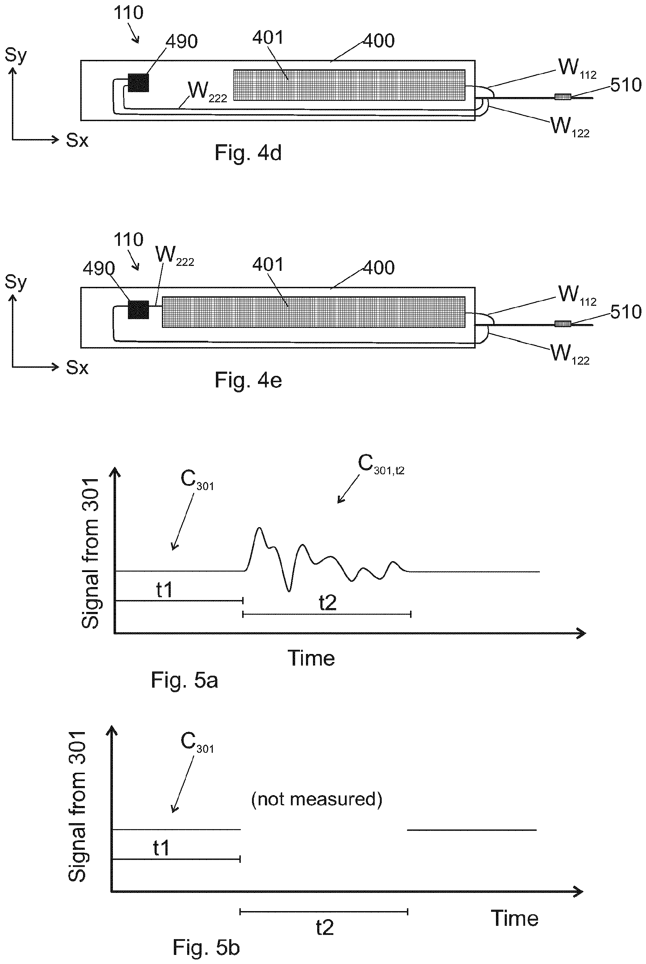

Concerning wiring of the components/electrodes, the first secondary electrode 401 need not serve for the purposes of supplying an electric current to the component 490 or receiving a current therefrom; however, it may. Referring to Fig. 4d, the primary first secondary wire W₁₁₂ can be used to guide the first common potential V_{COM1} to the first primary electrode 401; and the primary second secondary wire W₁₂₂ and the secondary second secondary wire W₂₂₂ can be used to drive the component 490 to activate it or to receive and electric signal from the component upon activating it by another (non-electric) signal.

However, the first secondary electrode 401 may serve for the purposes of supplying an electric current to the component 490 or receiving a current therefrom. Referring to Fig. 4e, during the first period of time t1, the primary first secondary wire W₁₁₂ can be used to guide the first common potential V_{COM1} to the first secondary electrode 401. Moreover, the primary second secondary wire W₁₂₂ is connected to the first lead of the component 490, while the secondary second secondary wire W₂₂₂ is connected to a second lead of the component 490 and to the first secondary electrode 401. Thus, during the second period of time t2, the secondary second secondary wire W₂₂₂, the first secondary electrode 401, and the primary first secondary wire W₂₂₂, in combination, form a conductor from the component 490 to the control unit 510 or the connector 520. Thus, the wires W₁₂₂ and W₂₂₂ can be used to drive the component 490 to activate it or to receive and electric signal from the component 490 upon activating it by another (non-electric) signal. The wires W₁₁₂ and W₁₂₂ are connected to the controller 510 or the connector 520 for receiving or feeding the electric signal from/to the component 490.

Therefore, an embodiment of a method for operating the layered device 110 comprises during a second period of time t2 [A] detecting that the second functionality is enabled, [B] enabling the second functionality of the device 110 by arranging a second potential difference ΔV₂ between the first primary electrode 301 and the first secondary electrode 401, the second potential difference ΔV₂ being different from the first potential difference ΔV₁ and different from zero, [C] activating a component 490 of the layered device 110, and/or [D] arranging an object to a galvanic contact with the first secondary electrode 401. As indicated above, preferably, the first secondary electrode and/or the component 490 is/are arranged in or on the secondary electrode layer 400. Moreover, concerning [C], an antenna may be activated. However, preferably, the activating of the component 490 comprises feeding an electric current to the component 490 through a wire and simultaneously receiving an electric current from the component 490 through another wire.

Concerning the option [A], this may be used e.g. when the component 490 is a transducer that transduces a non-electric signal to an electric signal, or if the component 490 is another transducer that is controlled by a different entity than the one performing the method (e.g. another control unit 530 than the control unit 510 performing the method). Concerning the option [B], this may be used e.g. when the second functionality is a capacitive measurement by the first secondary electrode 401. Concerning the option [C], this may be used e.g. when the second functionality involves activating a component 490 and the component can be activated by the same entity (e.g. the control unit 510) that performs the method. Concerning the option [D], this may be used e.g. when the second functionality is an electric measurement by the first secondary electrode 401.

Moreover, as indicated in the background, the capacitive measurement of compression is reasonably sensitive. Therefore, the enabling of the second functionality would disturb the measurement of the capacitance C₃₀₁, if the capacitance was measured also during the second period of time t2. The capacitance C₃₀₁ may be measured only during the first period of time t1, whereby the enabling of the second functionality only during the second period of time will not disturb these measurements. However, the capacitance C₃₀₁ may be measured also during the second period of time, when the second functionality is enabled. In any case, the embodiment of the method comprises taking into account the enabling of the second functionality in the determining or the compression of the compressible layer 200. The taking into account the enabling of the second functionality in the determining or the compression of the compressible layer 200 may include measuring the capacitance C₃₀₁ also during the second period of time t2, and correcting the measured capacitance or determining the compression therefrom with the knowledge that the second functionality has been enabled. If, for example, the enabling of the second functionality only increases the capacitance by a substantially constant value, this can be taken into account when determining the compression from the capacitance. As another example, in case the enabling of the second functionality shows as a fluctuating signal in the capacitance, such fluctuation may be filtered to obtain a corrected value of the capacitance (or the compression directly).

Concerning the arrangement 100, in an embodiment, the control unit 510 is configured to, during a second period of time t2, enable the second functionality of the device 100 by arranging a second potential difference ΔV₂ between the first primary electrode 301 and the first secondary electrode 401, the second potential difference ΔV₂ being different from the first potential difference ΔV₁ and different from zero and/or by activating a component 490 arranged in or on the secondary electrode layer 400. In addition, the control unit 510 is configured to take into account the enabling of the second functionality in the determining the compression of the compressible layer 200.

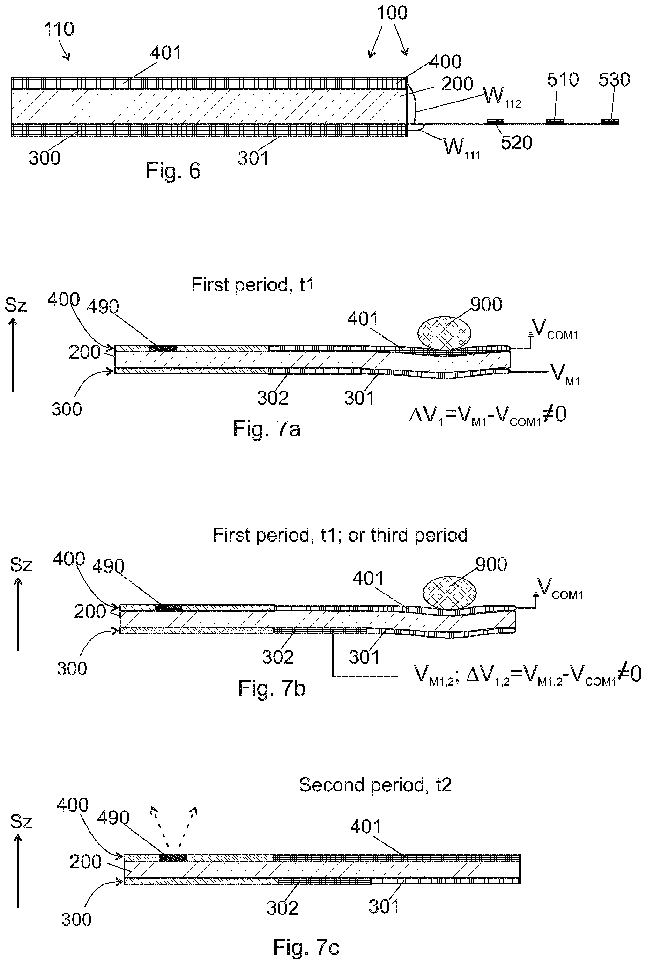

Referring to Fig. 6, the layered device 110 may be operated simultaneously by a first control unit 510 and a second control unit 530. Both the control units 510, 530 may be connected to the device through the connector 520. In the alternative, the layered device 110 may be operated by only one control unit 510 (see Fig. 1a).

From the point of view of the first control unit 510, how the enabling of the second functionality is taken into account depends on whether the first control unit can control the component 490; or is it a responsibility of another, independent, entity to operate the component 490. For example, the second control unit 530 may operate the component 490 independent of the first control unit. In the alternative, a light source (e.g. the Sun) may operate independent of the first control unt 510, and the component 490 may be a photovoltaic cell.

In case the first control unit 510 can control the enabling (i.e. activating) and deactivating the second functionality of the device 110, preferably when changing from the first period t1 to the second period t2, the second functionality is controlled to be activated so that it remains activated during the second period of time t2. Moreover, because the second functionality can be controlled, the control unit 510 needs not measure the capacitance C₃₀₁ (and the compression) during the second period of time t2. Thus, referring to Fig. 5b, in an embodiment, the second functionality is controlled to be deactivated during the first period of time t1, and the capacitance C₃₀₁ is measured at that period of time t1. Moreover, in the embodiment, the second functionality is controlled to be activated during the second period of time t2, and the capacitance C₃₀₁ is not measured at that period of time t2 or if measured, the value thereof is disregarded or corrected. Thus, an embodiment comprises controlling the second functionality such that during the first period of time the second functionality is deactivated and during the second period of time the second functionality is activated.

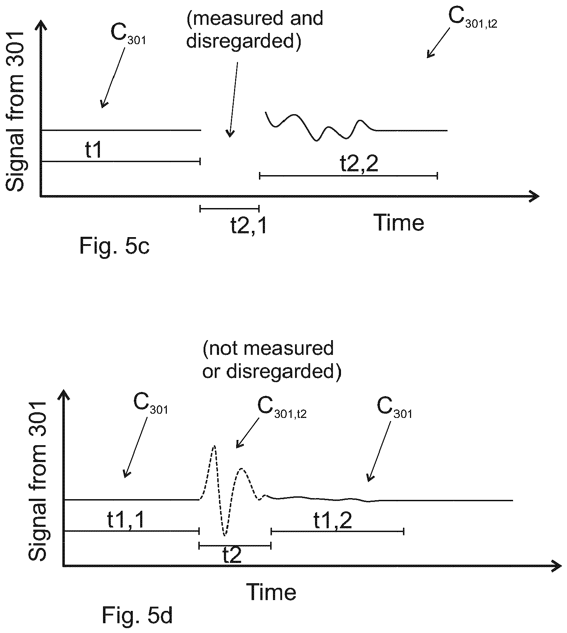

During the second period of time t2, the capacitance C₃₀₁ may be both measured and not measured. Referring to Fig. 5c during the first period of time t1, the capacitance C₃₀₁ can be measured as detailed in connection with Fig. 5a. Thereafter, during a primary part t2,1 of the second period of time, the second functionality may be active, and the capacitance not measured. Moreover, thereafter, during a secondary part t2,2 of the second period of time, the second functionality may be active, and the capacitance C₃₀₁ may be also measured. The enabling of the second functionality may be taken into account by correcting the signal and/or in the way that the compression is determined from the signal. The first period of time t1 of Fig 5a may correspond to the measurement as depicted in Fig. 3a. The primary part t2,1 and the secondary part t2,2 of the secondary period of time t2 may correspond to the measurement as depicted in Fig. 3c.

In practice, it may be that the disturbances are most prominent at the instance of time, when the other functionality is turned on, and the disturbances decrease with time, even if the other functionality remains enabled, as shown in Fig. 5a. Thus, in accordance with Fig. 5c and what has been said above, the measurement results may be disregarded (or no measurements of the capacitance C₃₀₁ be made) only for a short period of time (i.e. during the primary part t2,1 of the second period of time) immediately after the other functionality is turned on. However after a short while, the measurement results concerning the capacitance C₃₀₁ may be taken into account, because the disturbance is not necessarily significant; as readable from Fig. 5c.

To clarify, Fig. 5d shows an embodiment, wherein the capacitance C₃₀₁ is measured during a primary first period of time t1,1, when the second functionality is disabled. Thereafter, the second functionality is enabled, which would show as a disturbance in the signal, as shown by the dotted line at the second period of time t2. However, the disturbance may be mainly related to the onset of switching on the second functionality. Correspondingly reasonably shortly after switching on the second functionality, it does not significantly affect the measurements. Therefore, during a secondary first period of time t1,2, even if the second functionality is enabled, the capacitance C₃₀₁ may be measured and used even without taking into account the enabling of the second functionality. However, as detailed above, during the second period of time (i.e. at the time of switching on the second functionality), the effect of the second functionality is taken into account.

Thus, in an embodiment, the control unit 510 is configured to control the second functionality such that during at least a part of the first period of time t1 the second functionality is deactivated and during the second period of time t2 the second functionality is activated.

However, referring to Fig. 5a, in an embodiment, first control unit 510 cannot control the activating and deactivating of the second functionality of the device 110. Instead, the second functionality may be activated and deactivated by another control unit 530 or another entity. Thus, the first control unit 510 (or another entity practicing the method) only knows the status of the second functionality from a signal measured from the first primary electrode 301 or from a data message sent between the control units 530 and 510, to inform the other about the (upcoming/done) state change. The embodiment comprises measuring a signal from the first primary electrode 301 also during the second period of time t2, and determining, from the signal, that the second functionality has been enabled. The signal may be the capacitance C₃₀₁. Thus, an embodiment comprises measuring a capacitance C_{301,t2} of the first primary electrode 301 relative to the first secondary electrode 401 also during the second period of time t2, and determining, from the capacitance C_{301,t2}, that the second functionality has been enabled. Moreover, after determining that the second functionality has been enabled, the embodiment comprises compensating from signal, such as the capacitance C_{301,t2}, the effect of the second functionality or disregarding the signal. Referring to Fig. 5a, during the second period of time t2, the activity of the second functionality generates disturbance to the signal, which needs to be taken into account, or the signal during the second period t2 may be disregarded. It is noted that even if the capacitance C₃₀₁ may be measured during the second period of time t2, the second functionality includes at least some other functionality. Moreover, even if the method may comprise compensating from signal, such as the capacitance C_{301,t2}, the effect of the second functionality, the second functionality comprises something else than signal analysis of a signal measured from the electrodes (301, 401) such that the first secondary electrode 401 is connected to the first common potential V_{COM1}, and the first measurement potential V_{M1} is conducted to the first primary electrode 301; namely the thing that disturbs the signal.

Therefore, in an embodiment, the control unit 510 is configured to measure a signal (e.g. the capacitance C₃₀₁) from the first primary electrode during the second period of time and to determine, from the signal, that the second functionality has been enabled. Finally, the control unit is configured to compensate for the effect of the second functionality on the capacitance of the first primary electrode or disregard the capacitance measured during the second period of time or both. Referring to Fig. 5c, at a primary second period of time t2,1 the capacitance may be disregarded and at a secondary second period of time t2,2 the effect of the second functionality on the capacitance can be compensated for.

Moreover, it is possible that the first control unit 510 gets information about the activity of the second functionality otherwise. E.g. if activating the second functionality involves raising a potential at a lead of a component 490, the potential of that lead may be guided directly as an input signal to the first control unit 510. Thus, from this input signal, the first control unit 510 can determine that second functionality is enabled. Correspondingly, the capacitance C₃₀₁ (or another signal) would not need to be measured during the second period of time. Or, if measured, the capacitance could be disregarded. Reference is made to Fig. 5b. Evidently, the input signal would be detectable from the component 490 arranged in or on the primary or secondary electrode layer (300, 400) or the electrode (301, 401). Thus, an embodiment comprises measuring a signal from the primary electrode layer 300 or from the secondary electrode layer 400 during the second period of time t2; determining, from the signal, that the second functionality has been enabled; and one of [i] using the signal to compensate for the effect of the second functionality of the capacitance of the first primary electrode C_{301,t2} or [ii] disregarding the capacitance C_{301,t2} measured during the second period of time t2.

As detailed above, preferably, the input signal would be detectable from the component 490 arranged in or on the secondary electrode layer 400 or the first secondary electrode 401. Thus, an embodiment comprises measuring a signal from the secondary electrode layer 400 during the second period of time t2; determining, from the signal, that the second functionality has been enabled; and one of [i] using the signal to compensate for the effect of the second functionality of the capacitance of the first primary electrode C_{301,t2} or [ii] disregarding the capacitance C_{301,t2} measured during the second period of time t2.

Therefore, in an embodiment, the control unit 510 is configured to measure a signal (e.g. a potential of a lead of a component 490) from the secondary electrode layer 400 during the second period of time t2 and to determine, from the signal, that the second functionality has been enabled. Finally, the control unit is configured to compensate for the effect of the second functionality on the capacitance of the first primary electrode or to disregard the capacitance measured during the second period of time.

Preferably, the inactivity of the second functionality during the first period of time is also determined. The inactivity may be measured from the capacitance C₃₀₁, which is measured during the first period of time t1. Thus, an embodiment comprises determining, from the capacitance C₃₀₁ measured during the first period of time, that the second functionality has been disabled during the first period of time. The inactivity may be measured from input signal readable from the secondary electrode layer (see above). Thus, an embodiment comprises measuring a signal from the secondary electrode layer during the first period of time and determining, from the signal, that the second functionality has been disabled.

Correspondingly, in an embodiment, preferably, the control unit 510 is configured to determine, from the capacitance measured during the first period of time, that the second functionality has been disabled during at least a part of the first period of time and/or measure a signal from the secondary electrode layer during the first period of time and determining, from the signal, that the second functionality has been disabled during at least a part of the first period of time.

Concerning the second functionality, irrespective of whether it becomes enabled spontaneously or is activated e.g. by the control unit 510, in an embodiment, the second functionality involves transducing an electric signal (current or voltage) to another signal (e.g. optical signal, heat, or mechanical signal) or transducing a non-electric signal to an electric signal. In this embodiment, the device 110 comprises an activatable component 490, which may be the first secondary electrode 401, that is arranged in or on the secondary electrode layer 400. The device 110 comprises a primary wire (W₁₁₂, W₁₂₂) electrically connected to the component 490. If the component 490 is an antenna, only one wire suffices, and the component may transduce an RF-signal to electric signal and/or vice versa.

Preferably, two electrically conducting wires extend from the component 490. Referring to Figs 2e, 4d, and 4e, in an embodiment the device 110 comprises a primary wire (W₁₁₂, W₁₂₂) electrically connected to the component 490 and a secondary wire (W₂₁₂, W₂₂₂) electrically connected to the component 490. In an embodiment, the component 490 is configured to transduce an electric signal to another signal, the primary wire (W₁₁₂, W₁₂₂) is configured to feed an electric current to the component 490, and the secondary wire (W₂₁₂, W₂₂₂) is configured to let out the electric current from the component 490. In an embodiment, the component 490 is configured to transduce a non-electric signal to an electric signal, and the electric signal is detectable from the primary wire (W₁₁₂, W₁₂₂) and the secondary wire (W₂₁₂, W₂₂₂). As indicated above, the primary wire Wᵢⱼₖ is connected to the component j of the layer k; and the secondary wire W₂ⱼₖ is connected to the component j of the layer k.

Concerning the arrangement 110 comprising the control unit 510, therein the primary wire (W₁₁₂, W₁₂₂) is connected to the control unit 510. When the device comprises the secondary wire (W₂₁₂, W₂₂₂), the secondary wire (W₂₁₂, W₂₂₂) is connected to the control unit 510 (optionally via another wire and an electrode). However the method may be performed by another control unit attachable to the connector 520. Correspondingly, the primary and secondary wires may be connected to the connector 520.

In an embodiment of the method the second functionality involves transducing, by using the component 490, (i) an electric current or voltage to another, i.e. non-electric, form of a signal or (ii) a non-electric signal to an electric current or voltage.

Examples of the activatable component 490 that transduce another form of energy than electricity to an electric signal, and need at least one lead for functioning, include (i) galvanic contact pads (e.g. for driving electricity to an object) and (ii) antennas. An electrode (401, 301) may serve as a galvanic contact pad. In such an embodiment, at least a part of at least one of the component 490, the first primary electrode 301, and the first secondary electrode 401 is exposed. Because of the exposure, an object can be arranged in galvanic contact with the component 490, the first primary electrode 301, and/or the first secondary electrode 401. The galvanic contact can be formed without removing solid material of the device 110 or penetrating through solid material of the device 110. This applies to the device 110, the arrangement 100, and the method. It is possible that some measurements require presence of two exposed electrodes, and an electric signal is readable between these two electrodes once parts of an object are arranged in galvanic contact with both these electrodes. E.g. some heart-rate monitor operate according to this principle. In the alternative, an arrangement of two exposed electrodes (each having only one lead) can be seen as a (single) component having two leads.

Examples of the activatable component 490 that transduce another form of energy than electricity to an electric signal, and need at least two leads for functioning, include (i) piezoelectric components, e.g. sensors, that, when compressed, induce electric potential difference; (ii) photodetectors, including photovoltaic cells, that, when receiving light, induce electric current, (iii) thermoelectric components that, when imposed to a temperature gradient, induce electric current, (iv) microphones that, when imposed mechanical vibration, induce electric current.

Preferably, the second functionality involves feeding an electric current to the component 490 and receiving an electric current from the component 490.

A transducer, which is activated by feeding current to it may be e.g. a heater, an antenna, a light emitter, a display, or a sensor, such as a temperature sensor, a vital signs sensor, an inductive sensor, a piezoresistive sensor, or a strain gauge. The vital signals sensor may be e.g. a galvanic contact pad (or an arrangement with at least two contact pads) configured to form an electric contact (or electric contacts) with a skin of a user.

A transducer, which is activated by feeding current to it and receiving current therefrom may be e.g. a heater, a light emitter, a display, or a sensor, such as a temperature sensor, a vital signs sensor, an inductive sensor, a piezoresistive sensor, or a strain gauge.

As opposed to an activatable component comprising two leads, referring to Figs. 3a and 3b, the second functionality is achieved by using the first secondary electrode 401. Fig. 3a shows the first functionality in this case, i.e. measurement of compression caused by the object 900. These measurements are performed as discussed above.

The second functionality is enabled by using the first secondary electrode 401 as an antenna. Or conversely, some kind of antenna may be used as an electrode.

Fig. 3b shows another type of the second functionality using the first secondary electrode 401. In this case, the second functionality is enabled by arranging a second potential difference ΔV₂ between the first primary electrode 301 and the first secondary electrode 401. The second potential difference ΔV₂ is different from the first potential difference ΔV₁ and different from zero. The embodiment further comprises measuring a secondary capacitance C₄₀₁ of the first secondary electrode 401.

The second potential difference ΔV₂ not being zero ensures that the secondary capacitance C₄₀₁ can be measured. The second potential difference ΔV₂ not being the same as the first potential difference ΔV₁ ensures that also the changes of the environment, e.g. the presence of the object 900 in the vicinity of the first secondary electrode 401, can be detected. The second potential difference ΔV₂ can be arranged by connecting the first secondary electrode 401 to a second measurement potential V_{M2}, and conducting a second common potential V_{COM2} to the first primary electrode 301. The second potential difference ΔV₂ is, by definition (see above for ΔV₁), a difference (V_{COM2} - V_{M2}) between the potential of the first primary electrode 301 and the potential of the first secondary electrode 401. It is noted that the potential differences ΔV₁ and ΔV₂ are different from each other, even if their absolute values were the same. For example, both the common potentials V_{COM1} and V_{COM2} may be equal and both the measurement potentials V_{M1} and V_{M2} may also be equal. Moreover, both the common potentials V_{COM1} and V_{COM2} may be equal to a ground potential GND.

In this way, the secondary capacitance is indicative of at least one of: (i) a presence of an object in a vicinity of the first secondary electrode 401 and (ii) a property of material, the property affecting a dielectric constant of the material, such as humidity, heart rate, or sweating. Concerning the presence of an object 900, because the object 900 has a different dielectric constant than air, and may also be at least loosely connected to a ground potential, the object 900 affects the secondary capacitance C₄₀₁ as measured by the first secondary electrode. In a similar manner, if the location of the object 900 is constant, humidifying the object 900 affects it dielectric constant, and thus also the secondary capacitance C₄₀₁. Moreover, if the object 900 is e.g. a hand or a finger of a person, the person's heat beat affects the dielectric constant, since a heartbeat temporarily increases the amount of blood in the finger/hand. Sweating also affects dielectric constant of the body part that sweats.

The first secondary electrode 401 can be used for the second functionality as described above even if only one wire W₁₁₂ extends from the first secondary electrode 401, as shown in Fig. 1a. However, an electrode can be used in such a way, even if two wires W₁₁₂, W₂₁₂, extend from the first secondary electrode 401, as shown in Fig. 2e. This also shows that the electrode of Fig. 2e can be used for three different functionalities: measuring the primary capacitance C₃₀₁ (indicative of compression), heating (by feeding current through the electrode), and measuring the secondary capacitance C₄₀₁ (indicative of e.g. presence in a vicinity).

In an embodiment, the measuring of the secondary capacitance C₄₀₁ does not comprise feeding electric current to the to the first secondary electrode 401 and at the same time receiving electric current from the first secondary electrode 401. This is contrast to enabling e.g. a heating functionality of first secondary electrode 401 of Fig. 2e, which involves feeding electric current to the to the first secondary electrode 401 and at the same time receiving electric current from the first secondary electrode 401 using the wires W₁₁₂, W₂₁₂.

Preferably, the arranging the second potential difference ΔV₂ comprises connecting to the first primary electrode 301 to a second common potential V_{COM2} that equals the first common potential V_{COM1}, to which during the first period of time the first secondary electrode 401 is connected. This has the effect that the common potential V_{COM2}, V_{COM1} is not, during the second period of time t2, shielding the first secondary electrode from the effects of the object 900. Moreover, during the first period of time t1, the common potential V_{COM2}, V_{COM1} shields the compressible layer 200 and thus also shields the effect of an object 900 on the primary capacitance C₃₀₁.

More preferably, the potential differences ΔV₂ and ΔV₁ have opposite signs. This is beneficial, since then the control unit 510 needs not generate both positive and negative voltages. In fact, only one operating voltage (different from the ground potential) suffices. When the potential differences ΔV₂ and ΔV₁ have opposite signs, their product is negative. Thus, in a preferable embodiment, a product ΔV₁•ΔV₂ of the first potential difference ΔV₁ and the second potential difference ΔV₂ is less than zero.

The second common potential V_{COM2} may e.g. be a ground potential GND. This has the effect that since the object 900 is typically at least loosely connected to a virtual electric ground Gv, the effect of the object 900 on the secondary capacitance C₄₀₁ can more easily be sensed. However, the potential of the virtual electric ground Gv need not be the same as the ground potential GND of the device 110.

In a corresponding manner, in an embodiment, the control unit 510 is configured to, during the second period of time t2, enable the second functionality by [i] arranging a second potential difference ΔV₂ between the first primary electrode 301 and the first secondary electrode 401, the second potential difference ΔV₂ being different from the first potential difference ΔV₁ and different from zero and [ii] measuring a secondary capacitance of the first secondary electrode 401. Preferably, the control unit 510 is configured to, during the second period of time t2, connect to the first primary electrode 301 to a second common potential V_{COM2} that equals the first common potential V_{COM1}.

More preferably, the control unit 510 is configured to, during the second period of time t2, connect to the first primary electrode 301 to a second common potential V_{COM2} that equals the first common potential V_{COM1}; and connect the first secondary electrode 401 to a second measurement potential V_{M2}, such that a product ΔV₁•ΔV₂ of the first potential difference ΔV₁ and the second potential difference ΔV₂ is less than zero.

In an embodiment, during the second period of time t2, the device 110 is configured not to feed electric current to the to the first secondary electrode 401 and at the same time receive electric current from the first secondary electrode 401. In an embodiment, only one wire extends from the first secondary electrode 401.

This measurement principle has further benefits particularly when [a] the primary electrode layer 300 comprises at least a second primary electrode 302 and/or [b] the secondary electrode layer 400 comprises at least a second secondary electrode 402.

Concerning the option [a]: when the primary electrode layer 300 comprises at least a second primary electrode 302 (see Figs. 1b, 1c, and 1d), in an embodiment, when the second functionality is enabled (during the second period of time t2), the method comprises connecting the second primary electrode 302 to the same potential as the first primary electrode 301. In this way, the second primary electrode 302 and the first primary electrode 301 form a common electrode, relative to which the capacitance C₄₀₁ is measured. Thus, the embodiment comprises measuring the secondary capacitance C₄₀₁ of the first secondary electrode 401 relative to both the second primary electrode 302 and the first primary electrode 301 simultaneously. This has the effect that the secondary capacitance C₄₀₁ can be measured more reliably, because the electrode relative to which it is measured (i.e. the combination of electrodes 301 and 302) is effectively larger than in the case these electrodes were not connected (in which case size of the reference electrode would be that of one of the electrodes 301 and 302).

Correspondingly, in an embodiment of the arrangement 100, the primary electrode layer 300 of the device 110 comprises at least a second primary electrode 302; and the control unit 510 is configured to, during the second period of time t2, connect the second primary electrode 302 to the same potential as the first primary electrode 301.

Concerning the option [b]: when the secondary electrode layer 400 comprises at least a second secondary electrode 402 (see Figs. 1c, 1d, and 8), an embodiment comprises, measuring the capacitance C₃₀₁ of the first primary electrode 301 (e.g. during the first period of time t1) such that while measuring the capacitance C₃₀₁, the second secondary electrode 402 is connected to the same potential as the first secondary electrode 401. This is depicted in Fig. 8. Thus, the second secondary electrode 402 and the first secondary electrode 401 in combination form a shield for shielding an electric field in compressible layer 200 from disturbances. Thus, the first and second secondary electrodes (401, 402) form a shield for the measuring of the capacitance C₃₀₁ of the first primary electrode 301. For example, when measuring the compression caused by the object 900, the electrode 402 shields the electric field of the compressible layer 200 from the disturbance of the other object 910 (see Fig. 8). It is noted that this effect is beneficial also in the case the second functionality is a result of a transducer. Naturally the device 110 may comprise two electrodes 401, 402 in the secondary electrode layer 400, and further a component 490 (e.g. a transducer) arranged in or on the secondary electrode layer 400.

Thus, an embodiment of the method comprises, during the first period of time t1, connecting the second secondary electrode 402 to the first common potential V_{COM1}. Thus the capacitance C₃₀₁ of the first primary electrode 301 is measured relative also to the second secondary electrode 402.

Correspondingly, in an embodiment of the arrangement 100, the secondary electrode layer 400 of the device 110 comprises at least a second secondary electrode 402; and the control unit 510 is configured to, during the first period of time t1, connect the second secondary electrode 402 to the same potential as the first secondary electrode 401.

Referring to Figs. 7a to 7c, when the primary electrode layer 300 of the device 110 comprises several electrodes, several different capacitances can be measured, each capacitance corresponding to a compression of the compressible layer 200 at a location of that electrode. For example in Fig. 7a, a capacitance C₃₀₁ of the first primary electrode 301 is indicative of compression of the compressible layer 200 in a vicinity of the first primary electrode 301, i.e. compression by the object 900. Moreover, a capacitance C₃₀₂ of the second primary electrode 302 is indicative of compression of the compressible layer 200 in a vicinity of the second primary electrode 302. As shown in Figs. 7a and 7b, the object 900 does not affect compression of the layer 200 in the vicinity of the electrode 302. Thus, to improve spatial accuracy of the device 110, the primary electrode layer 300 may be provided with more electrodes.

In an embodiment, the primary electrode layer 300 comprises at least a second primary electrode 302. Referring to Fig. 7b, the embodiment of the method comprises measuring the capacitance C₃₀₂ of the second primary electrode 302. This capacitance C₃₀₂ may be measured during the first period of time t1 or during a third period of time. Preferably, while measuring the capacitance C₃₀₂ of the second primary electrode 302 (i.e. during the first or third period of time), the second functionality is disabled. In the alternative, the effect of the second functionality can be taken into account in the measurement of the capacitance C₃₀₂ in a similar manner as it can be taken in to account in the measurement of the capacitance C₃₀₁ *mutatis mutandis.*

For measuring the capacitance C₃₀₂, the method comprises connecting the first secondary electrode 401 and/or the second secondary electrode 402 to a potential, such as the first common potential V_{COM1} (as in Fig. 7b), and conducting a potential V_{M1,2} that is different from the potential of the first secondary electrode 401 and/or the potential of the second secondary electrode 402, respectively, to the second primary electrode 302. The potential V_{M1,2} that is conducted to the second primary electrode 302 may, but need not, equal the first measurement potential V_{M1} (see Fig. 7a and 7b). Referring to Fig. 7c, during the second period of time t2, the second functionality can be enabled as discussed above.

Naturally, both the primary electrode layer 300 and the secondary electrode layer 400 may comprise multiple electrodes as detailed in Fig. 1c. Thus, in an embodiment, the primary electrode layer 300 of the device 110 comprises the first primary electrode 301 and at least a second primary electrode 302; and the secondary electrode layer 400 of the device 110 comprises the first secondary electrode 401 and at least a second secondary electrode 402. These electrodes may be used as detailed above. For example, during the first period of time t1, the second functionality may be disabled, all the electrodes (401, 402) of the secondary electrode layer 400 may be connected to a same potential, and capacitances C₃₀₁, C₃₀₂ of each electrode (301, 302) of the primary electrode layer 300 may be measured subsequently. However, the electrodes 401, 402 of the secondary electrode layer need not be connected to the same potential. Preferably, the capacitance C₃₀₂ of the second primary electrode 302 is measured relative to at least the second secondary electrode 402. Thus, an embodiment comprises
- connecting the second secondary electrode 402 to a potential, such as the first common potential V_{COM1},
- conducting a potential that is different from the potential of the second secondary electrode 402 to the second primary electrode 302, and
- measuring a capacitance C₃₀₂ of the second primary electrode 302 relative to the second secondary electrode 402 for determining another compression of the layer 200 of compressible material.

Correspondingly, in an embodiment, the control unit 510 of the arrangement 100 is configured to connect the second secondary electrode 402 to a potential, such as the first common potential V_{COM1}; conduct a potential that is different from the potential of the second secondary electrode 402 to the second primary electrode 302; and measure a capacitance C₃₀₂ of the second primary electrode 302 relative to (at least) the second secondary electrode 402 for determining another compression of the layer 200 of compressible material.

Preferably, at the time of measuring a capacitance C₃₀₂ of the second primary electrode 302 relative to the second secondary electrode 402, the second functionality is disabled. However, as detailed above, this need not be the case, because the effect of the second functionality can be taken into account as detailed above. The capacitance C₃₀₂ of the second primary electrode 302 relative to the second secondary electrode 402 may be measured during the first period of time t1, or at the third period of time, or at a fourth period of time.

During the second period of time t2, the second functionality is enabled, and all the electrodes (301, 302) may be connected to a same potential. Preferably they are connected to a same potential when the second functionality is sensitive to variation is electric fields, e.g. when the second functionality comprises measuring a capacitance C₄₀₁, C₄₀₂ of an electrode of the secondary electrode layer. However, the electrodes 301, 302 of the primary electrode layer 300 need not be connected to a same potential, because the second functionality may be insensitive to electric fields. The electrodes 401, 402 of the secondary electrode layer 400 and/or the component 490 of the secondary electrode layer 400 may be operated as detailed above.

As indicated above, an embodiment of a method for operating the layered device 110 comprises during a second period of time t2 [A] detecting that the second functionality is enabled, [B] enabling the second functionality of the device 110 by arranging a second potential difference ΔV₂ between the first primary electrode 301 and the first secondary electrode 401, the second potential difference ΔV₂ being different from the first potential difference ΔV₁ and different from zero, [C] activating a component 490 of the layered device 110, and/or [D] arranging a an object to a galvanic contact with the first secondary electrode 401.

Concerning the option [B], the second functionality need not be capacitive sensing of presence of an object in the vicinity of the first secondary electrode 401. In an embodiment, the second functionality comprises another functionality than detecting presence of an object in the vicinity of the first secondary electrode 401. In an embodiment, the second functionality comprises another functionality than detecting presence of an object in the vicinity of any electrode of the secondary electrode layer 400. In addition or alternatively, in an embodiment, the second functionality comprises another functionality than measuring a quantity that is measurable from the same signal from which the capacitance C₃₀₁ between the first primary electrode 301 and the first secondary electrode 401 is measured to determine the compression of the compressible layer 200. In an embodiment, the second functionality comprises another functionality than measuring a quantity that is measurable from such a signal that is used to measure a capacitance between an electrode of the first primary electrode layer 300 and an electrode of the secondary electrode layer 400 for detecting the compression of the compressible layer 200.

In an embodiment, between the primary electrode layer 300 and the secondary electrode layer 400 only dielectric material has been arranged. Thus, preferably, the compressible layer 200 does not comprise an electrically at least semiconducting layer arranged in between dielectric layers. This has the effect that the structure remains simple. In particular, in an embodiment, the device 110 does not comprise electrically at least semiconducting material between the first primary electrode 301 and the first secondary electrode 401. Herein an electrically at least semiconducting material has a resistivity less than 10 S2m at a temperature of 23 °C.

However, referring to Fig. 1d, an accuracy of the measured degree of compression can be improved by arranging the first primary electrode 301 (or the whole primary electrode layer 300) in between the compressible layer 200 and a secondary compressible layer 610; and arranging at least a part of the secondary compressible layer 610 between the first primary electrode 301 (or the whole primary electrode layer) and an electrical conductor 710. What has been said about the properties of the compressible layer 200 applies to the secondary compressible layer 610. Thus, the first primary electrode 301 forms two capacitances: a first capacitance relative to at least the first secondary electrode 401 and a second capacitance relative to the electrical conductor 710. These may be measured separately following the principles detailed above. In the alternative, the first primary electrode 301 forms the capacitance C₃₀₁ relative to a combination of the electrical conductor 710 and at least the first secondary electrode 401. The scale of the compression sensor can also be engineered for different purposes e.g. by using different material in the secondary compressible layer 610 than in the compressible layer 200.

It has been found that when the second functionality involves a measurement of the capacitance of an electrode (401, 402) of the secondary electrode layer, an electrically conducting or semiconducting layer in between the object 900 and the electrode 401, 402 would reduce sensitivity of the capacitive measurement. Moreover, naturally, if the second functionality involves emitting light, an opaque layer should not be applied on the light emitting component.

For these reasons, in an embodiment, the secondary electrode layer 400 is not arranged between the compressible layer 200 and such a layer that is electrically at least semiconducting and opaque. In an embodiment, the first secondary electrode 401 is not arranged between the compressible layer 200 and such a layer that is electrically conducting. In an embodiment, a component 490 is not arranged between the compressible layer 200 and such a layer that is opaque. As an example, Fig. 2b shows the second covering 820, and the secondary electrode layer 400 is arranged between the second covering 820 and the compressible layer 200. If the second covering 820 was opaque or electrically at least semiconducting, the second covering could effective make the second functionality unusable.

However, referring to Fig. 1e, the primary electrode layer 300 may be covered with a first covering 810. Moreover, the secondary electrode layer 400 may be covered with a second covering 820. As detailed above, preferably, if a second covering 820 is applied, the second covering 820 is preferably transparent or electrically insulating. For definition of electrically insulating material, reference is made to what has been said above. As for transparency, solely for purposes of clarity, in this context a transmittivity of transparent material in the visual spectrum of radiation (from 400 nm to 750 nm) is at least 25 % at a temperature of 23 ° Celsius.

The device 110 measures the capacitance well at least when the electrode (e.g. 301 or 302) that is used for measuring the capacitance at least partially overlaps an electrode (e.g. 401 or 402, respectively) relative to which the capacitance is measured. Herein the meaning of overlapping is being on top of each other in a direction that is parallel to a direction Sz of thickness of the device at the location in which the occurrence of overlapping or nonoverlapping is determined. It is noted that since the device 110 may be conformable, and may be made to conform a non-planar object, a direction of thickness of the device depends on location. In any case, the direction of thickness is unidirectional with a norm of the primary electrode layer 300 (see Figs.)

Thus, in a preferable embodiment, at least a part of the first primary electrode 301 overlaps with at least a part of the first secondary electrode 401. More specifically, in a preferable embodiment, at least a part of the first primary electrode 301 overlaps, in a direction that is parallel to a direction of a thickness of the device 110, with at least a part of the first secondary electrode 401; wherein a direction of a thickness of the device 110 is parallel to a norm of the primary electrode layer 300. When the device 110 comprises the electrodes 301, 302, 401, and 402 as discussed above, preferably, at least a part of the second primary electrode 302 overlaps, in a direction that is parallel to a direction of a thickness of the device 110, with at least a part of the second secondary electrode 402.

More preferably, the part of the first primary electrode 301 that overlaps with the at least a part of the first secondary electrode 401 has an overlapping area such that the overlapping area is at least 50 % of an area of the smaller of the first primary electrode 301 and the first secondary electrode 401. When the device 110 comprises the electrodes 301, 302, 401, and 402 as discussed above, preferably also the part of the second primary electrode 302 that overlaps with the at least a part of the second secondary electrode 402 has an overlapping area such that the overlapping area is at least 50 % of an area of the smaller of the second primary electrode 302 and the second secondary electrode 402.

When measuring the capacitance C₃₀₁ of the first primary electrode 301, preferably, a capacitance of the whole first primary electrode 301 is measured by one measurement. Therefore, preferably, the first primary electrode 301 does not overlap at least two secondary electrodes (e.g. 401, 402) of the secondary electrode layer 400 such that, when measuring the capacitance C₃₀₁ of the first primary electrode 301, the electrodes of the secondary electrode layer that the first primary electrode 301 overlaps are arranged at different potentials. Preferably, the first primary electrode 301 does not overlap at least two secondary electrodes (e.g. 401, 402) of the secondary electrode layer 400. However, if the first primary electrode 301 overlaps at least two secondary electrodes (e.g. 401, 402) of the secondary electrode layer 400, if these secondary electrodes are arranged at the same potential, they form a common reference electrode, as discussed above, and the capacitance of the whole first primary electrode can be measured by one measurement.

Correspondingly, in an embodiment, the control unit 510 is configured to measure a capacitance from the whole area of the first primary electrode 301. In an embodiment, the control unit 510 is configured to measure a capacitance from the whole area of the first primary electrode 301 at one instance of time. In an embodiment, the control unit 510 is configured to measure a capacitance from the whole area of each one of the second primary electrode 302, too. By measuring the capacitance of a whole area of the electrode(s), there is no need, e.g. for measuring different parts of the electrodes in sequence, which improves the temporal accuracy of the measurements. More specifically, in an embodiment, the controller 500 is configured to measure: the capacitance from the whole area of the first primary electrode 301 at one instance of time and the capacitance from the whole area of the second primary electrode 302 at one instance of time.

In the above, the method, device and arrangement have been discussed mainly in connection with embodiments, wherein compressible and electrically insulating material 200m (see Fig. 9) has been arranged, as a compressible layer 200, in between the primary electrode layer 300 and the secondary electrode layer 400.

However, referring to Fig. 9, the first primary electrode 301 need not be comprised by a primary electrode layer 300. Instead, the first primary electrode 301 may be e.g. an electrode formed by sewing with a conductive yarn directly on the compressible and electrically insulating material 200m. In a similar manner the first secondary electrode 401 need not be comprised by a secondary electrode layer 400. The first secondary electrode 401 may be e.g. an electrode formed by sewing with a conductive yarn directly on the compressible and electrically insulating material 200m. As for measuring the capacitance, it suffices that compressible and electrically insulating material 200m is arranged between the first primary electrode 301 and the first secondary electrode 401 irrespective of any of: [a] that the compressible and electrically insulating material 200m is comprised by a compressible layer, [b] that the first primary electrode 301 is comprised by a primary electrode layer 300, and/or [c] that the first secondary electrode 401 is comprised by a secondary electrode layer 400.

However, when the device 110 comprises the second primary electrode 302, the second primary electrode 302 and the first primary electrode 301 may be arranged relative to each other on a same plane (e.g. a first plane, see e.g. Fig. 7c). In a similar manner, when the device 110 comprises the second secondary electrode 302, the second secondary electrode 402 and the first secondary electrode 401 may be arranged relative to each other on a same plane (e.g. a second plane, see e.g. Fig. 8). The compressible and electrically insulating material 200m may be arranged between these planes (i.e. the first plane and the second plane).

Concerning the placement of the component 490, it suffices that the device 110 comprises the component 490. However, preferably, the component is arranged in one of the following locations:
- in or on the primary electrode layer 300 (if present in the device 110),
- in or on the secondary electrode layer 400 (if present in the device 110),
- in or on the compressible and electrically insulating material 200m, or
- in or on the compressible layer 200 comprising the compressible and electrically insulating material 200m.

## Claims

1. A method for operating a device (110) having at least a first functionality and a second functionality,
- the first functionality being capacitive sensing of compression and
- the second functionality being another, different, functionality; and for enabling the first functionality the device (110) comprises
- a first primary electrode (301),
- a first secondary electrode (401), and
- compressible and electrically insulating material (200m) between the first primary electrode (301) and the first secondary electrode (401);
- the method comprising during a first period of time
• arranging a first potential difference (ΔV₁) between the first primary electrode (301) and the first secondary electrode (401) by
∘ connecting the first secondary electrode (401) to a first common potential (V_{COM1}), and
∘ conducting a first measurement potential (V_{M1}) to the first primary electrode (301), the first measurement potential (V_{M1}) being different from the first common potential (V_{COM1}), whereby
∘ the first potential difference (ΔV₁) is a difference (V_{M1} - V_{COM1}) between the first measurement potential (V_{M1}) and the first common potential (V_{COM1}) and
• measuring a capacitance (C₃₀₁) of the first primary electrode (301) relative to the first secondary electrode (401) for determining a compression of the compressible and electrically insulating material (200m),
- the method comprising
• detecting that the second functionality is enabled during a second period of time or
• during a second period of time, enabling the second functionality, wherein
- the second functionality comprises another functionality than capacitive measurement of a quantity such that the first secondary electrode (401) is connected to the first common potential (V_{COM1}), and the first measurement potential (V_{M1}) is conducted to the first primary electrode (301),
- during the first period of time (t1), the device (110) is arranged between a support (990) and an object (900) causing the compression of the compressible material (200m) such that the first primary electrode (301) is closer to the support (990) than the first secondary electrode (401), and
- during the second period of time (t2), the device (110) is arranged such that the first primary electrode (301) is closer to the support (990) than the first secondary electrode (401),
**characterized in that**
- the second functionality is enabled by using the first secondary electrode (401).

2. The method of claim 1, wherein the device (100) comprises
- a primary wire electrically connected to the first secondary electrode (401); and in the method
- the second functionality comprises transducing, by using the first secondary electrode (401), (i) an electric current or voltage to a non-electric signal or (ii) a non-electric signal to an electric current or voltage;
preferably,
- the second functionality is involves feeding an electric current to the first secondary electrode (401) or receiving an electric current from the first secondary electrode (401);
more preferably,
- the first secondary electrode (401) is a heater, an antenna, a temperature sensor, a vital signs sensor, an inductive sensor, a piezoresistive sensor, or a strain gauge.

3. The method of claim 2, wherein the device (100) comprises
- a secondary wire electrically connected to the first secondary electrode (401); and in the method
- the second functionality is involves, e.g. the second functionality is enabled by, feeding an electric current to the first secondary electrode (401) and receiving an electric current from the first secondary electrode (401);
more preferably,
- the first secondary electrode (401) is a heater, a vital signs sensor, an inductive sensor, a piezoresistive sensor, or a strain gauge.

4. The method of any of the claims 1 to 3, wherein the method comprising, during the second period of time, enabling the second functionality, wherein
- enabling the second functionality comprises
• arranging a second potential difference (ΔV₂) between the first primary electrode (301) and the first secondary electrode (401), the second potential difference (ΔV₂) being different from the first potential difference (ΔV₁) and
• measuring a secondary capacitance of the first secondary electrode (401);
preferably,
- the secondary capacitance is indicative of at least one of: (i) a presence of an object in a vicinity of the first secondary electrode (401), and (ii) a property of material, the property affecting a dielectric constant of the material, such as humidity;
more preferably,
- the arranging of the second potential difference (ΔV₂) comprises connecting to the first primary electrode (301) to a second common potential (V_{COM2}) that equals the first common potential (V_{COM1}), preferably such that a product (ΔV₁•ΔV₂) of the first potential difference (ΔV₁) and the second potential difference (ΔV₂) is less than zero.

5. The method of any of the claims 1 to 4, wherein
- the device (110) comprises at least a second primary electrode (302), and
- enabling the second functionality comprises connecting the second primary electrode (302) to the same potential as the first primary electrode (301); preferably,
- the second primary electrode (302) and the first primary electrode (301) are arranged on a first plane;
more preferably,
- in the embodiment of claim 4, the secondary capacitance of the first secondary electrode (401) is measured relative to both the second primary electrode (302) and the first primary electrode (301) because of the connecting the second primary electrode (302) to the same potential as the first primary electrode (301).

6. The method of any of the claims 1 to 5, wherein the method comprises, during the second period of time, enabling the second functionality, wherein
- enabling the second functionality comprises controlling the second functionality such that during at least a part of the first period of time the second functionality is deactivated and during the second period of time the second functionality is activated.

7. The method of any of the claims 1 to 6, wherein the method comprises, detecting that the second functionality is enabled during the second period of time, wherein detecting that the second functionality is enabled comprises
- measuring a signal from a primary electrode layer or from a secondary electrode layer during the second period of time,
- determining, from the signal, that the second functionality has been enabled, and
- compensating for the effect of the second functionality on the capacitance of the first primary electrode or disregarding the capacitance measured during the second period of time;
preferably, the method further comprises
- determining, from the capacitance measured during the first period of time, that the second functionality has been disabled during at least a part of the first period of time and/or
- measuring a signal from a secondary electrode layer during the first period of time and determining, from the signal, that the second functionality has been disabled.

8. The method of any of the claims 1 to 7, wherein
- the device (110) comprises at least a second secondary electrode (402); and the method comprises during the first period of time
- connecting the second secondary electrode (402) to the first common potential (V_{COM1}), whereby
- the capacitance (C₃₀₁) of the first primary electrode (301) is measured relative also to the second secondary electrode (402);
preferably,
- the second secondary electrode (402) and the first secondary electrode (401) are arranged on a second plane;
more preferably,
- the method comprises enabling the second functionality and the enabling the second functionality comprises
• arranging a second potential difference (ΔV₂) between the first primary electrode (301) and the first secondary electrode (401), the second potential difference (ΔV₂) being different from the first potential difference (ΔV₁) and
• measuring a secondary capacitance of the first secondary electrode (401);
more preferably,
- the arranging a second potential difference (ΔV₂) comprises connecting to the first primary electrode (301) to a second common potential (V_{COM2}) that equals the first common potential (V_{COM1}), preferably such that a product (ΔV₁•ΔV₂) of the first potential difference (ΔV₁) and the second potential difference (ΔV₂) is less than zero.

9. The method of any of the claims 1 to 8, wherein
- the device (110) comprises at least a second primary electrode (302), and the method comprises
- connecting the first secondary electrode (401) to a potential, such as the first common potential (V_{COM1}),
- conducting a potential that is different from the potential of the first secondary electrode (401) to the second primary electrode (302), and
- measuring a capacitance (C₃₀₂) of the second primary electrode (302) relative to the first secondary electrode (401) or a second secondary electrode (402) for determining another compression of a layer comprising the compressible material (200m);
preferably,
- the second primary electrode (302) and the first primary electrode (301) are arranged on a first plane.

10. An arrangement (100) for operating a device (110) having at least a first functionality and a second functionality,
- the first functionality being capacitive sensing of compression and
- the second functionality being another, different, functionality; the device (110) comprising
- a first primary electrode (301),
- a first secondary electrode (401), and
- compressible and electrically insulating material (200m) between the primary electrode (301) and the secondary electrode (401); the arrangement (100) comprising a control unit (510) configured to
- during a first period of time,
• arrange a first potential difference (ΔV₁) between the first primary electrode (301) and the first secondary electrode (401) by
∘ connecting the first secondary electrode (401) to a first common potential (V_{COM1}), and
∘ conducting a first measurement potential (V_{M1}) to the first primary electrode (301), the first measurement potential (V_{M1}) being different from the first common potential (V_{COM1}), whereby
∘ the first potential difference (ΔV₁) is a difference (V_{M1} - V_{COM1}) between the first measurement potential (V_{M1}) and the first common potential (V_{COM1}) and
• measure a capacitance (C₃₀₁) of the first primary electrode (301) relative to the first secondary electrode (401) for determining a compression of the compressible and electrically insulating material (200m), and
- control unit (510) is configured to
• detect that the second functionality of the device (110) is enabled during a second period of time or
• enable the second functionality of the device (110) at a second period of time, wherein
- the second functionality comprises another functionality than capacitive measurement of a quantity such that the first secondary electrode (401) is connected to the first common potential (V_{COM1}), and the first measurement potential (V_{M1}) is conducted to the first primary electrode (301); the arrangement (100) comprising
- a support (990) such that that the first primary electrode (301) is closer to the support (990) than the first secondary electrode (401),
**characterized in that**
- the second functionality is configured to be enabled by using the first secondary electrode (401).

11. The arrangement (100) of claim 10, wherein the device (110) comprises
- a primary wire electrically connecting the first secondary electrode (401) to the control unit (510), and
- a secondary wire electrically connecting the first secondary electrode (401) to the control unit (510);
preferably,
- the first secondary electrode (401) is configured to transduce (i) an electric current or voltage to a non-electric signal or (ii) a non-electric signal to an electric current or voltage;
more preferably,
- the first secondary electrode (401) is a heater, a vital signs sensor, an inductive sensor, a piezoresistive sensor, or a strain gauge.

12. The arrangement (100) of claim 10 or 11, wherein the control unit (510) is configured to, during the second period of time (t2), enable the second functionality by
• arranging a second potential difference (ΔV₂) between the first primary electrode (301) and the first secondary electrode (401), the second potential difference (ΔV₂) being different from the first potential difference (ΔV₁) and
• measuring a secondary capacitance of the first secondary electrode (401);
preferably,
- the control unit (510) is configured to, during the second period of time (t2), connect to the first primary electrode (301) to a second common potential (V_{COM2}) that equals the first common potential (V_{COM1}),
more preferably,
- a product (ΔV₁•ΔV₂) of the first potential difference (ΔV₁) and the second potential difference (ΔV₂) is less than zero.

13. The arrangement of any of the claims 10 to 12, wherein
- the control unit (510) is configured to control the second functionality such that during at least a part of the first period of time the second functionality is deactivated and during the second period of time the second functionality is activated.

14. The arrangement of any of the claims 10 to 13, wherein the control unit (510) is configured to
- measure a signal indicative of the second functionality being enabled,
- determine, from the signal, that the second functionality has been enabled, and
- compensate for the effect of the second functionality on the capacitance of the first primary electrode or disregard the capacitance measured during the second period of time;
preferably, the control unit (510) is configured to
- determine, from the capacitance measured during the first period of time, that the second functionality has been disabled during at least a part of the first period of time and/or
- measure a signal from a secondary electrode layer during the first period of time and determining, from the signal, that the second functionality has been disabled.

15. The method of any of the claims 1 to 9 or the arrangement of any of the claims 10 to 14, wherein
- the first secondary electrode (401) is not arranged between the compressible and electrically insulating material and such a layer that is electrically at least semiconducting and opaque;
preferably,
- the first secondary electrode (401) is not arranged between the compressible and electrically insulating material and such a layer that is electrically conducting.

## Patentansprüche

1. Verfahren zum Betreiben einer Vorrichtung (110) mit mindestens einer ersten Funktionalität und einer zweiten Funktionalität,
- wobei die erste Funktionalität die kapazitive Erfassung von Kompression ist und
- wobei die zweite Funktionalität eine andere, unterschiedliche Funktionalität ist; und zum Aktivieren der ersten Funktionalität die Vorrichtung (110) Folgendes umfasst
- eine erste Primärelektrode (301),
- eine erste Sekundärelektrode (401) und
- komprimierbares und elektrisch isolierendes Material (200m) zwischen der ersten Primärelektrode (301) und der ersten Sekundärelektrode (401);
- das Verfahren während eines ersten Zeitraums Folgendes umfasst
• Anordnen einer ersten Potentialdifferenz (ΔV₁) zwischen der ersten Primärelektrode (301) und der ersten Sekundärelektrode (401) durch
∘ Verbinden der ersten Sekundärelektrode (401) mit einem ersten gemeinsamen Potential (V_{COM1}), und
∘ Leiten eines ersten Messpotentials (V_{M1}) zu der ersten Primärelektrode (301), wobei das erste Messpotential (V_{M1}) sich von dem ersten gemeinsamen Potential (V_{COM1}) unterscheidet, wobei
∘ die erste Potentialdifferenz (ΔV₁) eine Differenz (V_{M1} - V_{COM1}) zwischen dem ersten Messpotential (V_{M1}) und dem ersten gemeinsamen Potential (V_{COM1}) ist und
• Messen einer Kapazität (C₃₀₁) der ersten Primärelektrode (301) relativ zu der ersten Sekundärelektrode (401) zum Bestimmen einer Kompression des komprimierbaren und elektrisch isolierenden Materials (200m),
- wobei das Verfahren Folgendes umfasst:
• Erkennen, dass die zweite Funktionalität während eines zweiten Zeitraums aktiviert ist, oder
• Aktivieren der zweiten Funktionalität während eines zweiten Zeitraums, wobei
- die zweite Funktionalität eine andere Funktionalität als die kapazitive Messung einer Größe umfasst, so dass die erste Sekundärelektrode (401) mit dem ersten gemeinsamen Potential (V_{COM1}) verbunden ist und das erste Messpotential (V_{M1}) an die erste Primärelektrode (301) geleitet wird,
- während des ersten Zeitraums (t1) die Vorrichtung (110) zwischen einer Unterlage (990) und einem Objekt (900) angeordnet ist, das die Kompression des komprimierbaren Materials (200m) bewirkt, so dass die erste Primärelektrode (301) näher an der Unterlage (990) ist als die erste Sekundärelektrode (401), und
- während des zweiten Zeitraums (t2) die Vorrichtung (110) so angeordnet ist, dass die erste Primärelektrode (301) näher an der Unterlage (990) ist als die erste Sekundärelektrode (401),
**dadurch gekennzeichnet, dass**
- die zweite Funktionalität durch Verwendung der ersten Sekundärelektrode (401) ermöglicht wird.

2. Verfahren nach Anspruch 1, wobei die Vorrichtung (100) Folgendes umfasst:
- einen Primärdraht, der elektrisch mit der ersten Sekundärelektrode (401) verbunden ist;
und bei dem Verfahren
- die zweite Funktionalität das Umwandeln (i) eines elektrischen Stroms oder einer elektrischen Spannung in ein nicht elektrisches Signal oder (ii) eines nicht elektrischen Signals in einen elektrischen Strom oder eine elektrische Spannung unter Verwendung der ersten Sekundärelektrode (401) umfasst;
Vorzugsweise,
- die zweite Funktionalität das Zuführen eines elektrischen Stroms zur ersten Sekundärelektrode (401) oder das Empfangen eines elektrischen Stroms von der ersten Sekundärelektrode (401) umfasst;
noch bevorzugter,
- die erste Sekundärelektrode (401) eine Heizung, eine Antenne, ein Temperatursensor, ein Vitalzeichensensor, ein induktiver Sensor, ein piezoresistiver Sensor oder ein Dehnungsmessstreifen ist.

3. Verfahren nach Anspruch 2, wobei die Vorrichtung (100) Folgendes umfasst:
- einen Sekundärdraht, der elektrisch mit der ersten Sekundärelektrode (401) verbunden ist;
und bei dem Verfahren
- die zweite Funktionalität Folgendes umfasst, z.B. die zweite Funktionalität durch Folgendes aktiviert wird, Zuführen eines elektrischen Stroms zur ersten Sekundärelektrode (401) und Empfangen eines elektrischen Stroms von der ersten Sekundärelektrode (401);
noch bevorzugter,
- die erste Sekundärelektrode (401) ein Heizelement, ein Vitalzeichensensor, ein induktiver Sensor, ein piezoresistiver Sensor oder ein Dehnungsmessstreifen ist.

4. Verfahren nach einem der Ansprüche 1 bis 3, wobei das Verfahren während des zweiten Zeitraums das Aktivieren der zweiten Funktionalität umfasst, wobei
- das Aktivieren der zweiten Funktionalität Folgendes umfasst
• Anordnen einer zweiten Potentialdifferenz (ΔV₂) zwischen der ersten Primärelektrode (301) und der ersten Sekundärelektrode (401), wobei die zweite Potentialdifferenz (ΔV₂) sich von der ersten Potentialdifferenz (ΔV₁) unterscheidet und
• Messen einer Sekundärkapazität der ersten Sekundärelektrode (401);
Vorzugsweise,
- die Sekundärkapazität auf mindestens eines der folgenden hinweist: (i) die Anwesenheit eines Objekts in der Nähe der ersten Sekundärelektrode (401) und (ii) eine Materialeigenschaft, wobei die Eigenschaft eine Dielektrizitätskonstante des Materials beeinflusst, wie etwa Feuchtigkeit;
noch bevorzugter,
- das Anordnen der zweiten Potentialdifferenz (ΔV₂) das Verbinden der ersten Primärelektrode (301) mit einem zweiten gemeinsamen Potential (V_{COM2}) umfasst, das gleich dem ersten gemeinsamen Potential (V_{COM1}) ist, vorzugsweise so, dass ein Produkt (ΔV₁·ΔV₂) der ersten Potentialdifferenz (ΔV₁) und der zweiten Potentialdifferenz (ΔV₂) kleiner als Null ist.

5. Verfahren nach einem der Ansprüche 1 bis 4, wobei
- die Vorrichtung (110) mindestens eine zweite Primärelektrode (302) umfasst, und
- das Aktivieren der zweiten Funktionalität das Verbinden der zweiten Primärelektrode (302) mit demselben Potential wie die erste Primärelektrode (301) umfasst;
Vorzugsweise,
- die zweite Primärelektrode (302) und die erste Primärelektrode (301) auf einer ersten Ebene angeordnet sind;
noch bevorzugter,
- in der Ausführungsform von Anspruch 4, die Sekundärkapazität der ersten Sekundärelektrode (401) relativ sowohl zur zweiten Primärelektrode (302) als auch zur ersten Primärelektrode (301) gemessen wird, da die zweite Primärelektrode (302) mit dem gleichen Potential wie die erste Primärelektrode (301) verbunden ist.

6. Verfahren nach einem der Ansprüche 1 bis 5, wobei das Verfahren das Aktivieren der zweiten Funktionalität während des zweiten Zeitraums umfasst, wobei
- das Aktivieren der zweiten Funktionalität das Steuern der zweiten Funktionalität umfasst, so dass während zumindest eines Teils des ersten Zeitraums die zweite Funktionalität deaktiviert und während des zweiten Zeitraums die zweite Funktionalität aktiviert ist.

7. Verfahren nach einem der Ansprüche 1 bis 6, wobei das Verfahren das Erkennen umfasst, dass die zweite Funktionalität während des zweiten Zeitraums aktiviert ist, wobei das Erkennen, dass die zweite Funktionalität aktiviert ist, Folgendes umfasst:
- Messen eines Signals von einer primären Elektrodenschicht oder von einer sekundären Elektrodenschicht während des zweiten Zeitraums,
- Bestimmen anhand des Signals, dass die zweite Funktionalität aktiviert wurde, und
- Kompensieren der Auswirkung der zweiten Funktionalität auf die Kapazität der ersten primären Elektrode oder Ignorieren der während des zweiten Zeitraums gemessenen Kapazität;
vorzugsweise das Verfahren weiterhin Folgendes umfasst
- Bestimmen anhand der während des ersten Zeitraums gemessenen Kapazität, dass die zweite Funktionalität während zumindest eines Teils des ersten Zeitraums deaktiviert wurde und/oder
- Messen eines Signals von einer sekundären Elektrodenschicht während des ersten Zeitraums und Bestimmen anhand des Signals, dass die zweite Funktionalität deaktiviert wurde.

8. Verfahren nach einem der Ansprüche 1 bis 7, wobei
- die Vorrichtung (110) mindestens eine zweite Sekundärelektrode (402) umfasst; und das Verfahren während des ersten Zeitraums Folgendes umfasst
- Verbinden der zweiten Sekundärelektrode (402) mit dem ersten gemeinsamen Potential (V_{COM1}), wobei
- die Kapazität (C₃₀₁) der ersten Primärelektrode (301) auch relativ zur zweiten Sekundärelektrode (402) gemessen wird;
vorzugsweise,
- die zweite Sekundärelektrode (402) und die erste Sekundärelektrode (401) auf einer zweiten Ebene angeordnet sind;
noch bevorzugter,
- das Verfahren das Aktivieren der zweiten Funktionalität umfasst und das Aktivieren der zweiten Funktionalität Folgendes umfasst
• das Anordnen einer zweiten Potentialdifferenz (ΔV₂) zwischen der ersten Primärelektrode (301) und der ersten Sekundärelektrode (401), wobei die zweite Potentialdifferenz (ΔV₂) sich von der ersten Potentialdifferenz (ΔV₁) unterscheidet und
• das Messen einer Sekundärkapazität der ersten Sekundärelektrode (401);
noch bevorzugter,
- das Anlegen einer zweiten Potentialdifferenz (ΔV₂) das Verbinden der ersten Primärelektrode (301) mit einem zweiten gemeinsamen Potential (V_{COM2}) umfasst, das gleich dem ersten gemeinsamen Potential (V_{COM1}) ist, vorzugsweise so, dass ein Produkt (ΔV₁·ΔV₂) der ersten Potentialdifferenz (ΔV₁) und der zweiten Potentialdifferenz (ΔV₂) kleiner als Null ist.

9. Verfahren nach einem der Ansprüche 1 bis 8, wobei
- die Vorrichtung (110) mindestens eine zweite Primärelektrode (302) umfasst und das Verfahren Folgendes umfasst:
- Verbinden der ersten Sekundärelektrode (401) mit einem Potential, wie beispielsweise dem ersten gemeinsamen Potential (V_{COM1}),
- Leiten eines Potentials, das sich von dem Potential der ersten Sekundärelektrode (401) unterscheidet, zur zweiten Primärelektrode (302) und
- Messen einer Kapazität (C₃₀₂) der zweiten Primärelektrode (302) relativ zur ersten Sekundärelektrode (401) oder einer zweiten Sekundärelektrode (402) zum Bestimmen einer weiteren Kompression einer Schicht, die das komprimierbare Material (200m) umfasst;
vorzugsweise,
- die zweite Primärelektrode (302) und die erste Primärelektrode (301) auf einer ersten Ebene angeordnet sind.

10. Anordnung (100) zum Betreiben einer Vorrichtung (110) mit zumindest einer ersten Funktionalität und einer zweiten Funktionalität,
- wobei die erste Funktionalität die kapazitive Erfassung von Kompression ist und
- wobei die zweite Funktionalität eine andere, unterschiedliche Funktionalität ist; die Vorrichtung (110) Folgendes umfasst
- eine erste Primärelektrode (301),
- eine erste Sekundärelektrode (401) und
- komprimierbares und elektrisch isolierendes Material (200m) zwischen der Primärelektrode (301) und der Sekundärelektrode (401) ; die Anordnung (100) eine Steuereinheit (510) umfasst, die so dazu konfiguriert ist
- während eines ersten Zeitraums,
• eine erste Potentialdifferenz (ΔV₁) zwischen der ersten Primärelektrode (301) und der ersten Sekundärelektrode (401) durch Folgendes einzurichten
o Verbinden der ersten Sekundärelektrode (401) mit einem ersten gemeinsamen Potential (V_{COM1}), und
o Leiten eines ersten Messpotentials (V_{M1}) zur ersten Primärelektrode (301), wobei das erste Messpotential (V_{M1}) sich von dem ersten gemeinsamen Potential (V_{COM1}) unterscheidet, wobei
o die erste Potentialdifferenz (ΔV₁) eine Differenz (V_{M1} - V_{COM1}) zwischen dem ersten Messpotential (V_{M1}) und dem ersten gemeinsamen Potential (V_{COM1}) ist und
• eine Kapazität (C₃₀₁) der ersten Primärelektrode (301) relativ zur ersten Sekundärelektrode (401) zu messen, um eine Kompression des komprimierbaren und elektrisch isolierenden Materials (200m) zu bestimmen, und
- Steuereinheit (510) dazu konfiguriert ist,
• zu erkennen, dass die zweite Funktionalität der Vorrichtung (110) während eines zweiten Zeitraums aktiviert ist oder
• die zweite Funktionalität der Vorrichtung (110) in einem zweiten Zeitraum zu aktivieren, wobei
- die zweite Funktionalität eine andere Funktionalität als die kapazitive Messung einer Größe umfasst, so dass die erste Sekundärelektrode (401) mit dem ersten gemeinsamen Potential (V_{COM1}) verbunden ist, und das erste Messpotential (V_{M1}) an die erste Primärelektrode (301) geleitet wird; wobei die Anordnung (100) Folgendes umfasst
- eine Halterung (990), so dass die erste Primärelektrode (301) näher an der Halterung (990) liegt als die erste Sekundärelektrode (401),
**dadurch gekennzeichnet, dass**
- die zweite Funktionalität so konfiguriert ist, dass sie durch die Verwendung der ersten Sekundärelektrode (401) aktiviert wird.

11. Anordnung (100) nach Anspruch 10, wobei die Vorrichtung (110) Folgendes umfasst:
- einen Primärdraht, der die erste Sekundärelektrode (401) elektrisch mit der Steuereinheit (510) verbindet, und
- einen Sekundärdraht, der die erste Sekundärelektrode (401) elektrisch mit der Steuereinheit (510) verbindet; Vorzugsweise,
- die erste Sekundärelektrode (401) so konfiguriert ist, dass sie (i) einen elektrischen Strom oder eine elektrische Spannung in ein nicht elektrisches Signal oder (ii) ein nicht elektrisches Signal in einen elektrischen Strom oder eine elektrische Spannung umwandelt;
noch bevorzugter,
- die erste Sekundärelektrode (401) ein Heizelement, ein Vitalzeichensensor, ein induktiver Sensor, ein piezoresistiver Sensor oder ein Dehnungsmessstreifen ist.

12. Anordnung (100) nach Anspruch 10 oder 11, wobei die Steuereinheit (510) dazu konfiguriert ist, während des zweiten Zeitraums (t2), die zweite Funktionalität durch Folgendes zu aktivieren
• Anordnen einer zweiten Potentialdifferenz (ΔV₂) zwischen der ersten Primärelektrode (301) und der ersten Sekundärelektrode (401), wobei die zweite Potentialdifferenz (ΔV₂) sich von der ersten Potentialdifferenz (ΔV₁) unterscheidet und
• Messen einer Sekundärkapazität der ersten Sekundärelektrode (401);
Vorzugsweise,
- die Steuereinheit (510) dazu konfiguriert ist, während des zweiten Zeitraums (t2) die erste Primärelektrode (301) mit einem zweiten gemeinsamen Potential (V_{COM2}) zu verbinden, das dem ersten gemeinsamen Potential (V_{COM1}) entspricht,
noch bevorzugter,
- ein Produkt (ΔV₁·ΔV₂) aus der ersten Potentialdifferenz (ΔV₁) und der zweiten Potentialdifferenz (ΔV₂) kleiner als Null ist.

13. Anordnung nach einem der Ansprüche 10 bis 12, wobei
- die Steuereinheit (510) so konfiguriert ist, dass sie die zweite Funktionalität steuert, so dass während zumindest eines Teils des ersten Zeitraums die zweite Funktionalität deaktiviert und während des zweiten Zeitraums die zweite Funktionalität aktiviert ist.

14. Anordnung nach einem der Ansprüche 10 bis 13, wobei die Steuereinheit (510) dazu konfiguriert ist
- ein Signal zu messen, das anzeigt, dass die zweite Funktionalität aktiviert ist,
- anhand des Signals zu bestimmen, dass die zweite Funktionalität aktiviert wurde, und
- die Auswirkung der zweiten Funktionalität auf die Kapazität der ersten Primärelektrode zu kompensieren oder die während des zweiten Zeitraums gemessene Kapazität zu ignorieren;
vorzugsweise die Steuereinheit (510) dazu konfiguriert ist,
- aus der während des ersten Zeitraums gemessenen Kapazität zu bestimmen, dass die zweite Funktionalität während zumindest eines Teils des ersten Zeitraums deaktiviert wurde und/oder
- während des ersten Zeitraums ein Signal von einer Sekundärelektrodenschicht zu messen und aus dem Signal zu bestimmen, dass die zweite Funktionalität deaktiviert wurde.

15. Verfahren nach einem der Ansprüche 1 bis 9 oder Anordnung nach einem der Ansprüche 10 bis 14, wobei
- die erste Sekundärelektrode (401) nicht zwischen dem komprimierbaren und elektrisch isolierenden Material und einer Schicht angeordnet ist, die elektrisch zumindest halbleitend und undurchsichtig ist; Vorzugsweise,
- die erste Sekundärelektrode (401) nicht zwischen dem komprimierbaren und elektrisch isolierenden Material und einer Schicht angeordnet ist, die elektrisch leitend ist.

## Revendications

1. Procédé de fonctionnement d'un dispositif (110) ayant au moins une première fonctionnalité et une seconde fonctionnalité,
- la première fonctionnalité étant une détection capacitive de compression et
- la seconde fonctionnalité étant une autre fonctionnalité différente ; et pour activer la première fonctionnalité, le dispositif (110) comprend
- une première électrode primaire (301),
- une première électrode secondaire (401), et
- un matériau compressible et électriquement isolant (200m) entre la première électrode primaire (301) et la première électrode secondaire (401) ;
- le procédé comprenant, pendant une première période de temps
• l'agencement d'une première différence de potentiel (ΔV₁) entre la première électrode primaire (301) et la première électrode secondaire (401) par
∘ la connexion de la première électrode secondaire (401) à un premier potentiel commun (V_{COM1}), et
∘ la conduite d'un premier potentiel de mesure (V_{M1}) vers la première électrode primaire (301), le premier potentiel de mesure (V_{M1}) étant différent du premier potentiel commun (V_{COM1}), moyennant quoi
∘ la première différence de potentiel (ΔV₁) est une différence (V_{M1} - V_{COM1}) entre le premier potentiel de mesure (VM₁) et le premier potentiel commun (V_{COM1}) et
• la mesure d'une capacité (C₃₀₁) de la première électrode primaire (301) par rapport à la première électrode secondaire (401) pour déterminer une compression du matériau compressible et électriquement isolant (200m),
- le procédé comprenant
• la détection que la seconde fonctionnalité est activée pendant une seconde période de temps ou
• pendant une seconde période de temps, l'activation de la seconde fonctionnalité, dans lequel
- la seconde fonctionnalité comprend une autre fonctionnalité que la mesure capacitive d'une quantité de sorte que la première électrode secondaire (401) est connectée au premier potentiel commun (V_{COM1}), et le premier potentiel de mesure (V_{M1}) est conduit vers la première électrode primaire (301) ;
- pendant la première période de temps (t1), le dispositif (110) est agencé entre un support (990) et un objet (900) entraînant la compression du matériau compressible (200m) de sorte que la première électrode primaire (301) est plus proche du support (990) que la première électrode secondaire (401), et
- pendant la seconde période de temps (t2), le dispositif (110) est agencé de sorte que la première électrode primaire (301) est plus proche du support (990) que la première électrode secondaire (401), **caractérisé en ce que**
- la seconde fonctionnalité est activée à l'aide de la première électrode secondaire (401).

2. Procédé selon la revendication 1, dans lequel le dispositif (100) comprend
- un fil primaire connecté électriquement à la première électrode secondaire (401) ; et dans le procédé
- la seconde fonctionnalité comprend la transduction, à l'aide de la première électrode secondaire (401), (i) d'un courant ou d'une tension électrique en un signal non électrique ou (ii) d'un signal non électrique en un courant ou une tension électrique ;
de préférence,
- la seconde fonctionnalité implique l'alimentation en courant électrique de la première électrode secondaire (401) ou la réception d'un courant électrique provenant de la première électrode secondaire (401) ;
plus préférablement,
- la première électrode secondaire (401) est un élément chauffant, une antenne, un capteur de température, un capteur de signes vitaux, un capteur inductif, un capteur piézorésistif ou une jauge de contrainte.

3. Procédé selon la revendication 2, dans lequel le dispositif (100) comprend
- un fil secondaire connecté électriquement à la première électrode secondaire (401) ; et dans le procédé
- la seconde fonctionnalité implique, par exemple la seconde fonctionnalité est activée à l'aide de, l'alimentation en courant électrique de la première électrode secondaire (401) et la réception d'un courant électrique provenant de la première électrode secondaire (401) ;
plus préférablement,
- la première électrode secondaire (401) est un élément chauffant, un capteur de signes vitaux, un capteur inductif, un capteur piézorésistif ou une jauge de contrainte.

4. Procédé selon l'une quelconque des revendications 1 à 3, dans lequel le procédé comprend, pendant la seconde période de temps, l'activation de la seconde fonctionnalité, dans lequel
- l'activation de la seconde fonctionnalité comprend
• l'agencement d'une seconde différence de potentiel (ΔV₂) entre la première électrode primaire (301) et la première électrode secondaire (401), la seconde différence de potentiel (ΔV₂) étant différente de la première différence de potentiel (ΔV₁) et
• la mesure d'une capacité secondaire de la première électrode secondaire (401) ;
de préférence,
- la capacité secondaire est indicative d'au moins l'un des éléments suivants : (i) la présence d'un objet à proximité de la première électrode secondaire (401), et (ii) une propriété de matériau, la propriété affectant une constante diélectrique du matériau, telle que l'humidité ;
plus préférablement,
- l'agencement de la seconde différence de potentiel (ΔV₂) comprend la connexion de la première électrode primaire (301) à un second potentiel commun (V_{COM2}) qui est égal au premier potentiel commun (V_{COM1}), de préférence de sorte qu'un produit (ΔV₁•ΔV₂) de la première différence de potentiel (ΔV₁) et la seconde différence de potentiel (AV₂) est inférieur à zéro.

5. Procédé selon l'une quelconque des revendications 1 à 4, dans lequel
- le dispositif (110) comprend au moins une seconde électrode primaire (302), et
- l'activation de la seconde fonctionnalité comprend la connexion de la seconde électrode primaire (302) au même potentiel que la première électrode primaire (301) ; de préférence,
- la seconde électrode primaire (302) et la première électrode primaire (301) sont agencées sur un premier plan ;
plus préférablement,
- dans le mode de réalisation selon la revendication 4, la capacité secondaire de la première électrode secondaire (401) est mesurée par rapport à la fois à la seconde électrode primaire (302) et à la première électrode primaire (301) en raison de la connexion de la seconde électrode primaire (302) au même potentiel que la première électrode primaire (301).

6. Procédé selon l'une quelconque des revendications 1 à 5, dans lequel le procédé comprend, pendant la seconde période, l'activation de la seconde fonctionnalité, dans lequel
- l'activation de la seconde fonctionnalité comprend la commande de la seconde fonctionnalité de sorte que, pendant au moins une partie de la première période de temps, la seconde fonctionnalité est désactivée et, pendant la seconde période de temps, la seconde fonctionnalité est activée.

7. Procédé selon l'une quelconque des revendications 1 à 6, dans lequel le procédé comprend la détection que la seconde fonctionnalité est activée pendant la seconde période de temps, dans lequel la détection que la seconde fonctionnalité est activée comprend
- la mesure d'un signal provenant d'une couche d'électrode primaire ou d'une couche d'électrode secondaire pendant la seconde période de temps,
- la détermination, à partir du signal, que la seconde fonctionnalité a été activée, et
- la compensation de l'effet de la seconde fonctionnalité sur la capacité de la première électrode primaire ou le fait de ne pas tenir compte de la capacité mesurée pendant la seconde période de temps ;
de préférence, le procédé comprend en outre
- la détermination, à partir de la capacité mesurée pendant la première période de temps, que la seconde fonctionnalité a été désactivée pendant au moins une partie de la première période de temps et/ou
- la mesure d'un signal provenant d'une couche d'électrode secondaire pendant la première période de temps et la détermination, à partir du signal, que la seconde fonctionnalité a été désactivée.

8. Procédé selon l'une quelconque des revendications 1 à 7, dans lequel
- le dispositif (110) comprend au moins une seconde électrode secondaire (402) ; et le procédé comprend, pendant la première période de temps
- la connexion de la seconde électrode secondaire (402) au premier potentiel commun (V_{COM1}), moyennant quoi
- la capacité (C₃₀₁) de la première électrode primaire (301) est mesurée également par rapport à la seconde électrode secondaire (402) ;
de préférence,
- la seconde électrode secondaire (402) et la première électrode secondaire (401) sont agencées sur un second plan ;
plus préférablement,
- le procédé comprend l'activation de la seconde fonctionnalité et l'activation de la seconde fonctionnalité comprend
• l'agencement d'une seconde différence de potentiel (ΔV₂) entre la première électrode primaire (301) et la première électrode secondaire (401), la seconde différence de potentiel (ΔV₂) étant différente de la première différence de potentiel (AV₁) et
• la mesure d'une capacité secondaire de la première électrode secondaire (401) ;
plus préférablement,
- l'agencement d'une seconde différence de potentiel (AV₂) comprend la connexion de la première électrode primaire (301) à un second potentiel commun (V_{COM2}) qui est égal au premier potentiel commun (V_{COM1}), de préférence de sorte qu'un produit (ΔV₁•ΔV₂) de la première différence de potentiel (ΔV₁) et la seconde différence de potentiel (AV₂) est inférieur à zéro.

9. Procédé selon l'une quelconque des revendications 1 à 8, dans lequel
- le dispositif (110) comprend au moins une seconde électrode primaire (302), et le procédé comprend
- la connexion de la première électrode secondaire (401) à un potentiel, tel que le premier potentiel commun (V_{COM1}),
- la conduite d'un potentiel qui est différent du potentiel de la première électrode secondaire (401) vers la seconde électrode primaire (302), et
- la mesure d'une capacité (C₃₀₂) de la seconde électrode primaire (302) par rapport à la première électrode secondaire (401) ou à une seconde électrode secondaire (402) pour déterminer une autre compression d'une couche comprenant le matériau compressible (200m) ;
de préférence,
- la seconde électrode primaire (302) et la première électrode primaire (301) sont agencées sur un premier plan.

10. Agencement (100) de fonctionnement d'un dispositif (110) ayant au moins une première fonctionnalité et une seconde fonctionnalité,
- la première fonctionnalité étant une détection capacitive de compression et
- la seconde fonctionnalité étant une autre fonctionnalité différente ; le dispositif (110) comprenant
- une première électrode primaire (301),
- une première électrode secondaire (401), et
- un matériau compressible et électriquement isolant (200m) entre l'électrode primaire (301) et l'électrode secondaire (401) ; l'agencement (100) comprenant une unité de commande (510) configurée pour
- pendant une première période,
• agencer une première différence de potentiel (ΔV₁) entre la première électrode primaire (301) et la première électrode secondaire (401) par
∘ la connexion de la première électrode secondaire (401) à un premier potentiel commun (V_{COM1}), et
∘ la conduite d'un premier potentiel de mesure (V_{M1}) vers la première électrode primaire (301), le premier potentiel de mesure (V_{M1}) étant différent du premier potentiel commun (V_{COM1}), moyennant quoi
∘ la première différence de potentiel (ΔV₁) est une différence (V_{M1} - V_{COM1}) entre le premier potentiel de mesure (V_{M1}) et le premier potentiel commun (V_{COM1}) et
• mesurer une capacité (C₃₀₁) de la première électrode primaire (301) par rapport à la première électrode secondaire (401) pour déterminer une compression du matériau compressible et électriquement isolant (200m), et
- l'unité de commande (510) est configurée pour
• détecter que la seconde fonctionnalité du dispositif (110) est activée pendant une seconde période de temps ou
• activer la seconde fonctionnalité du dispositif (110) à une seconde période de temps, dans lequel
- la seconde fonctionnalité comprend une autre fonctionnalité que la mesure capacitive d'une quantité de sorte que la première électrode secondaire (401) est connectée au premier potentiel commun (V_{COM1}), et le premier potentiel de mesure (V_{M1}) est conduit vers la première électrode primaire (301) ; l'agencement (100) comprenant
- un support (990) de sorte que la première électrode primaire (301) est plus proche du support (990) que la première électrode secondaire (401),
**caractérisé en ce que**
- la seconde fonctionnalité est configurée pour être activée à l'aide de la première électrode secondaire (401) .

11. Agencement (100) selon la revendication 10, dans lequel le dispositif (110) comprend
- un fil primaire connectant électriquement la première électrode secondaire (401) à l'unité de commande (510), et
- un fil secondaire connectant électriquement la première électrode secondaire (401) à l'unité de commande (510) ;
de préférence,
- la première électrode secondaire (401) est configurée pour transduire (i) un courant ou une tension électrique en un signal non électrique ou (ii) un signal non électrique en un courant ou une tension électrique ; plus préférablement,
- la première électrode secondaire (401) est un élément chauffant, un capteur de signes vitaux, un capteur inductif, un capteur piézorésistif ou une jauge de contrainte.

12. Agencement (100) selon la revendication 10 ou 11, dans lequel l'unité de commande (510) est configurée pour, pendant la seconde période de temps (t2), activer la seconde fonctionnalité par
• l'agencement d'une seconde différence de potentiel (ΔV₂) entre la première électrode primaire (301) et la première électrode secondaire (401), la seconde différence de potentiel (ΔV₂) étant différente de la première différence de potentiel (ΔV₁) et
• la mesure d'une capacité secondaire de la première électrode secondaire (401) ;
de préférence,
- l'unité de commande (510) est configurée pour, pendant la seconde période de temps (t2), connecter la première électrode primaire (301) à un second potentiel commun (V_{COM2}) qui est égal au premier potentiel commun (V_{COM1}),
plus préférablement,
- un produit (ΔV₁•ΔV₂) de la première différence de potentiel (AV₂) et de la seconde différence de potentiel (ΔV₂) est inférieur à zéro.

13. Agencement selon l'une quelconque des revendications 10 à 12, dans lequel
- l'unité de commande (510) est configurée pour commander la seconde fonctionnalité de sorte que, pendant au moins une partie de la première période de temps, la seconde fonctionnalité est désactivée et, pendant la seconde période de temps, la seconde fonctionnalité est activée.

14. Agencement selon l'une quelconque des revendications 10 à 13, dans lequel l'unité de commande (510) est configurée pour
- mesurer un signal indicatif de l'activation de la seconde fonctionnalité,
- déterminer, à partir du signal, que la seconde fonctionnalité a été activée, et
- compenser l'effet de la seconde fonctionnalité sur la capacité de la première électrode primaire ou ne pas tenir compte de la capacité mesurée pendant la seconde période de temps ;
de préférence, l'unité de commande (510) est configurée pour
- déterminer, à partir de la capacité mesurée pendant la première période de temps, que la seconde fonctionnalité a été désactivée pendant au moins une partie de la première période de temps et/ou
- mesurer un signal provenant d'une couche d'électrode secondaire pendant la première période de temps et la détermination, à partir du signal, que la seconde fonctionnalité a été désactivée.

15. Procédé selon l'une quelconque des revendications 1 à 9 ou agencement selon l'une quelconque des revendications 10 à 14, dans lequel
- la première électrode secondaire (401) n'est pas agencée entre le matériau compressible et électriquement isolant et une telle couche qui est électriquement au moins semi-conductrice et opaque ;
de préférence,
- la première électrode secondaire (401) n'est pas agencée entre le matériau compressible et électriquement isolant et une telle couche qui est électriquement conductrice.
